(19) Europäisches Patentamt
European Patent Office
Office européen des brevets

(11) **EP 1 688 783 B1**

(12) **EUROPEAN PATENT SPECIFICATION**

(45) Date of publication and mention
of the grant of the patent:
**14.10.2009 Bulletin 2009/42**

(21) Application number: **04819455.9**

(22) Date of filing: **26.11.2004**

(51) Int Cl.:
*G02F 1/13* (2006.01)     *G02F 1/137* (2006.01)

(86) International application number:
**PCT/JP2004/017612**

(87) International publication number:
**WO 2005/052674 (09.06.2005 Gazette 2005/23)**

(54) **OPTICAL ELEMENT USING LIQUID CRYSTAL HAVING OPTICAL ISOTROPY**

OPTISCHES ELEMENT MIT EINEM FLÜSSIGKRISTALL MIT OPTISCHER ISOTROPIE

ELEMENT OPTIQUE UTILISANT DES CRISTAUX LIQUIDES PRESENTANT UNE ISOTROPIE OPTIQUE

(84) Designated Contracting States:
**AT BE BG CH CY CZ DE DK EE ES FI FR GB GR HU IE IS IT LI LU MC NL PL PT RO SE SI SK TR**

(30) Priority: **27.11.2003   JP 2003397673**
**28.11.2003   JP 2003398504**
**25.12.2003   JP 2003429423**

(43) Date of publication of application:
**09.08.2006   Bulletin 2006/32**

(73) Proprietor: **ASAHI GLASS COMPANY LTD.
Tokyo 100-8405 (JP)**

(72) Inventors:
• **OOI, Yoshiharu,**
c/o Asahi Glass Company, Limited
Tokyo 1008405 (JP)
• **NOMURA, Takuji**
Koriyama-shi, Fukushima 9630215 (JP)
• **KOYANAGI, Atsushi**
Koriyama-shi, Fukushima 9630215 (JP)

(74) Representative: **Müller-Boré & Partner
Patentanwälte
Grafinger Strasse 2
81671 München (DE)**

(56) References cited:
WO-A-03/019247          WO-A-20/06043516
DE-A1- 3 425 584        JP-A- 5 072 509
JP-A- 5 072 509         JP-A- 11 125 801
JP-A- 61 051 130        JP-A- 2002 208 158
JP-A- 2003 043 234      JP-A- 2003 327 966
US-A1- 2003 021 534

• KIKUCHI H ET AL: "Polymer-stabilized liquid crystal blue phases" NATURE MATERIALS, NATURE PUBLISHING GROUP, LONDON, GB, vol. 1, 2 September 2002 (2002-09-02), pages 64-68, XP002272036 ISSN: 1476-4660
• KIKUCHI H.: 'Nature Materials' vol. 1, September 2002, pages 64 - 68, XP002272036

## Description

TECHNICAL FIELD

The present invention relates to an optical element employing a liquid crystal having optical isotropy, in particular, to a diffraction element and an optical attenuator employing the above liquid crystal as a part of diffraction grating, which is adapted to apply voltage to control substantial refractive index of the liquid crystal, and diffracts incident light to control light quantity of 0-th order diffraction light (transmitted light), a wavelength-variable filter and a wavefront control element for taking out selectively and variably light signal having a desired wavelength from a light signal having multiple wavelengths, a liquid crystal lens which shows a lens effect by controlling the effective refractive index of the liquid crystal employed in the wavefront control element, and an aberration correction element for compensating a wavefront aberration of an optical system by changing a wavefront of output light with respect to that of input light.

BACKGROUND ART

Heretofore, a technique relating to a diffraction element for isotropically changing refractive index depending on magnitude of applied voltage, by using a blue phase cholesteric liquid crystal (hereinafter referred to as blue phase liquid crystal) containing a chiral material and having an isotropic refractive index, has been disclosed, for example, in US Patent Publication No. 4,767,194. Fig. 17 shows an example of the construction of a liquid crystal element 200 disclosed in US Patent Publication No. 4,767,194 and a conceptual cross-sectional view of the optical system of the element. In the conventional liquid crystal element 200, a blue phase liquid crystal 201 is sandwiched and held by two glass substrates 204 and 205 having patterned transparent electrodes 202 and 203 respectively, and a seal 206 present between them.

A voltage output from a power supply 208 is applied between the transparent electrodes 202 and 203 opposing to each other. The light quantity of 0-th order diffraction light emitted from the light source 210, straightly transmitted through the liquid crystal element 200 and reached a projection screen 220, changes depending upon the magnitude of applied voltage. The liquid crystal element 200 having such a construction is capable of conducting high-speed switching, and e.g. a phase grid (i.e. a phase diffraction grating) can be obtained by employing the liquid crystal element 200.

Here, since the blue phase having a isotropic diffractive index is developed only within a temperature range of from 1 to 5°C, a heating transparent plate 207 as a transparent heating member, is formed on the glass substrate 204 to control the temperature so as to maintain the blue phase. However, since the blue phase is developed only within the above-mentioned extremely narrow temperature range, accurate and difficult temperature control is required. Under the circumstances, in order to solve the problem of temperature control, a technique has been developed according to which a monomer is mixed into the liquid crystal and the liquid crystal is irradiated with ultraviolet rays within a temperature range in which a blue phase liquid crystal is developed, to polymerize the monomer, whereby the temperature range in which the blue phase liquid crystal is developed, can be expanded from a temperature range of from 1 to 5°C to a temperature range of at least 60°C. Hereinafter, the blue phase liquid crystal whose temperature range is expanded by the above method, is referred to as a polymer stabilized blue phase liquid crystal. Nature Materials, Vol. 1, 2002, September, P. 64 confirms that high-speed response of at most 1 msec can be obtained by employing such a polymer stabilized blue phase liquid crystal. However, no example of the construction of a switching element has been disclosed heretofore, which uses optical isotropy and does not depend on incident polarization state.

Further, in a wavelength division multiplexing communication, a wavelength-variable filter for selecting only light of desired wavelength from light pulses of a large number of wavelengths, is required. Heretofore, various types of wavelength-variable filter such as a liquid crystal etalon type wavelength-variable filter are examined. Here, such a liquid crystal etalon type wavelength-variable filter has, as disclosed in e.g. JP-A-5-45618, a construction that a cavity of a publicly known etalon is filled with a nematic liquid crystal, and substantial refractive index of the liquid crystal is changeable by applying a voltage to the liquid crystal, so that the optical gap as the optical path of the etalon is changeable.

However, due to polarization dependence of the nematic liquid crystal, the application of the liquid crystal etalon type wavelength-variable filter has been limited. Further, a response speed when a voltage is applied to the nematic liquid crystal, is about tens of milliseconds. The speed is preferably higher to switch and select light of desired wavelength instantaneously.

As a measure to improve polarization dependence of a liquid crystal etalon type wavelength-variable filter, for example, it has been proposed to make a spiral axis of liquid crystal molecules in the liquid crystal etalon type wavelength-variable filter, perpendicular to a glass substrate. However, if the spiral axis of the liquid crystal molecules is made to be perpendicular to the glass substrate, the liquid crystal turns into a focal conic state in which the spiral axis is in parallel with the substrate and thus, the liquid crystal becomes a light-scattering member when the liquid crystal is driven by voltage application, whereby light of desired wavelength cannot be selected. Also with respect to response speed of the liquid crystal, as disclosed in e.g. JP-A-6-148692, the response speed is tens of milliseconds like a conventional nematic liquid crystal, and it cannot be expected that the response speed is at most 1 msec.

Further, a construction is proposed, which employs an optical component such as a polarizing beam splitter or a mirror, to divide incident light into two linearly polarized light beams, and both of thus divided polarization factors are re-combined after the light beams are transmitted through a liquid crystal etalon type wavelength-variable filter filled with a nematic liquid crystal. However, as disclosed in e.g. Photonic Technology Letters, Vol. 3, No. 12, P. 1091 (1991), due to requirement of additional optical component such as a polarizing beam splitter or a mirror, difficulty of downsizing, or due to presence of variation of optical gap in a plane of a liquid crystal etalon type wavelength-variable filter, it is technically difficult to constitute a liquid crystal etalon type wavelength-variable filter having a narrow transmission band width.

Further, U.S. Patent No. 4,767,194 discloses an example in which the liquid crystal element 200 is an optical modulation element using the blue phase liquid crystal and whose effective refractive index is isotropically changeable depending on applied voltage.

In an optical system provided with the liquid crystal element 200 having the above-mentioned construction, the intensity of a principal light ray emitted from a light source 210, transmitted through the liquid crystal element 200 and reaching a projection screen 220, changes depending on applied voltage, whereby e.g. a phase grid capable of performing high-speed switching, can be obtained. Here, as an application of liquid crystal of nematic phase or smectic phase, development of optical elements such as a lens element employing such a liquid crystal and configured to function as a lens, or a aberration correction element employing such a liquid crystal and configured to control a wavefront to compensate a wavefront aberration of an optical system, has been attempted.

Document DE 3 425 584 discloses an optical element using a blue phase liquid crystal and document Kikuchi et al., Nature materials, vol. 1, p. 64 discloses polymer stabilized blue phase liquid crystals.

DISCLOSURE OF THE INVENTION

PROBLEM TO BE SOLVED BY THE INVENTION

However, since these conventional optical elements employ a nematic liquid crystal or a smectic liquid crystal having polarization dependence, there have been various problems caused by polarization dependence. These are specifically as follows.

At first, there has been a problem that production process of the element becomes complicated to constitute the element so as to accommodate to polarization dependence of e.g. nematic liquid crystal. With respect to conventional diffraction elements and optical attenuators, two substrates each having an electrode formed and patterned, is required and the structure of these electrodes is complicated, and high position alignment accuracy is required since a phase diffraction grating having e.g. desired refractive index depending on applied voltage cannot be obtained if the positions of electrodes opposing to each other are shifted. In particular, in order to obtain a diffraction grating diffracting incident light effectively and at a large angle, the electrodes have to be patterned with an accuracy of within 10 $\mu$m in terms of an interval of neighboring electrodes, and to align the position of electrodes with such an accuracy, and it has been difficult to obtain a diffraction element for practical use.

Further, electric field produced by the electrodes opposing to each other is also formed in a liquid crystal region having no electrode, and the refractive index of the liquid crystal in such a region changes depending on such an electric field, which causes a problem that a phase diffraction grating having a desired characteristic cannot be obtained and the diffraction efficiency is degraded.

As another problem caused by polarization dependence of e.g. nematic liquid crystal, there is a problem that the number of components have to be increased to clear the polarization dependence, which prevents downsizing. In a conventional liquid crystal etalon type wavelength-variable filter, due to the polarization dependence of a nematic liquid crystal as described above, it is not possible to realize a wavelength-variable filter having no polarization dependence without additional optical components, and it has been difficult to realize downsizing.

Further, if a smectic liquid crystal is employed to improve the response to cope with a problem that conventional elements employing e.g. nematic liquid crystal have response speed, there has been a problem that the function changes depending on polarization state of incident light. Specifically, in an optical element (lens element or aberration correction element) employing a nematic liquid crystal or a smectic liquid crystal, there is such a problem in practical use that response speed is slow when nematic phase is used or that one whose response is improved by employing a smectic phase ferroelectric liquid crystal functions differently depending on polarization state of incident light.

The present invention has been made to solve these problems, and the present invention provides an optical element as defined in claim 1, i.e. a diffraction element, and an optical attenuator comprising said optical element, as defined in claim 2.

By this construction, since the refractive index of the liquid crystal having optical isotropy changes depending on voltage applied via transparent electrodes, an optical element capable of obtaining high-speed response equivalent or more than that of conventional element, without depending on incident polarization, can be realized.

By this construction, besides the above effects, since a polymer stabilized cholesteric blue phase liquid crystal is employed as the cholesteric blue phase liquid crystal, a diffraction element can be realized, which is capable of obtaining stable and high extinction ratio and capable of performing high-speed optical switching within a wide temperature range and without depending on incident polarization.

Further, in the above diffraction element, the transparent electrodes are disposed between the diffraction grating and the transparent substrate.

By this construction, besides the above effects of the diffraction element, since transparent electrodes are disposed between the diffraction grating and the respective transparent substrate, a diffraction element not requiring patterning of transparent electrodes depending on grating shape or position alignment between the patterns, can be realized.

Further, in the above diffraction element, the voltage is applied to the cholesteric blue phase liquid crystal via the transparent electrodes.

By this construction, besides the above effects of diffraction element, since it is only necessary to form a patterned transparent electrode only on the substrate surface on which the diffraction grating made of the isotropic-refractive-index solid material is formed, no transparent electrode is necessary to form on the opposite substrate surface and there is no need for positional alignment, and accordingly, it is possible to realize a diffraction element whose production process can be simplified as compared with the conventional element.

Further, as already indicated above, when the optical element is an optical attenuator, the optical attenuator comprises the diffraction element and a separator for isolating a high order diffraction light of incident light generated by application of voltage via the transparent electrodes of the diffraction element, from a 0-th order diffraction light of the incident light to extract the 0-th order diffraction light straightly transmitted through the diffraction element, and wherein the light quantity of 0-th order diffraction light is controlled depending on voltage applied via the electrodes.

By this construction, an optical attenuator having an effect equivalent to the effect of a diffraction element, can be realized.

EFFECTS OF THE INVENTION

According to the present invention, since the refractive index of a liquid crystal having optical isotropy, changes depending on a voltage applied via transparent electrodes, the present invention can provide an optical element having an effect of achieving high-speed response equivalent or more than that of conventional elements, without depending on incident polarization.

Further, by employing a blue phase liquid crystal or a polymer stabilized blue phase liquid crystal, it is possible to provide a diffraction element and an optical attenuator having an effect of obtaining high-speed optical switching and extinction ratio equivalent or more than those of conventional elements, without depending on incident polarization.

Further, by disposing a liquid crystal layer made of an isotropic-refractive-index liquid crystal, in an optical resonator, and by configuring the liquid crystal layer so that its refractive index is changeable by applying a voltage, it is possible to provide a wavelength-variable filter capable of selecting light of a desired wavelength employing no additional optical component other than the filter itself, and having no polarization dependence.

Further, since the present invention employs a blue phase liquid crystal, it is possible to provide a wavefront control element, a liquid crystal lens and an aberration correction element capable of controlling a wavefront according to the applied voltage with high speed and without depending on incident wavelength.

BRIEF DESCRIPTION OF THE DRAWINGS

Fig. 1: A view schematically showing a cross-sectional structure of a diffraction element according to a first example not falling within the scope of the present invention.

Fig. 2: An explanation view explaining an example of voltage response of the diffraction element

Fig. 3: A cross-sectional view schematically showing a construction employing converging element of convex lens and a limiting aperture as selection means.

Fig. 4: A view schematically showing a cross-sectional structure of a diffraction element employing a diffraction grating having a saw-wave form cross-section made of an isotropic-refractive-index solid material.

Fig. 5: An explanation view explaining an example of an operation of the diffraction element shown in Fig. 4.

Fig. 6: A view schematically showing a cross-sectional structure of a diffraction element having a construction of disposing a light-reflective film between a transparent substrate and a transparent electrode film.

Fig. 7: A view schematically showing a cross-sectional structure of an example of an optical attenuator employing the diffraction element shown in Fig. 6.

Fig. 8: A view schematically showing the cross-sectional structure of the diffraction element according to an embodiment of the present invention.

Fig. 9: A view schematically showing a plane structure of the diffraction element shown in Fig. 8.

Fig. 10: A side view schematically showing an example of the construction of a liquid crystal etalon type wavelength-variable filter according to an example not falling within the scope of the present invention.

Fig. 11: A cross-sectional view of the wavefront control element according to an example not falling within the scope of the present invention.

Fig. 12(A): A schematic view of a driving means for generating a lens function of liquid crystal lens, in a wavefront control element shown in Fig. 12, which shows an example of segment type electrode pattern.

Fig. 12(B): A phase difference distribution diagram obtained by the segment type electrode pattern.

Fig. 13(A): A schematic view of a driving means for generating a lens function of liquid crystal lens, in a wavefront control element shown in Fig. 12, which shows an example of power supply type electrode pattern.

Fig. 13(B): A phase difference distribution diagram obtained by the power supply type electrode pattern.

Fig. 14(A): A schematic view of a driving means for making the aberration correction element generate spherical aberration, which particularly shows an example of segment type electrode pattern.

Fig. 14(B): A phase difference distribution diagram obtained by the segment type electrode pattern.

Fig. 15(A): A schematic view of a driving means for making the aberration correction element generate spherical aberration, which particularly shows an example of power supply type electrode pattern.

Fig. 15(B): A phase difference distribution diagram obtained by the power supply type electrode pattern.

Fig. 16: A cross-sectional view of the wavefront control element according to an example not falling within the scope of the present invention.

Fig. 17: A view showing an example of the construction of a conventional liquid crystal element and a schematic cross-section of an optical system.

EXPLANATION OF NUMERALS

1, 21: Diffraction grating
2A, 22A: Grating
2B, 22B, 51: Isotropic refractive index liquid crystal
3, 3A, 3B, 4, 52A, 52B, 65, 66, 115, 116:

  Transparent electrode

5, 6, 56A, 56B, 61, 62, 111, 112: Transparent substrate
7, 63, 113: Seal
8, 59, 68, 118: Voltage control means
9: Light-reflective film
10, 20, 30, 40: Diffraction element
11: Convex lens
12: Limiting aperture
13, 13A, 13B: Light transmission portion of optical fiber
50: Wavelength-variable filter
53A, 53B: Reflective mirror
54A, 54B: Adhesive agent
55A, 55B: Spacer

57A, 57B: Antireflective film
58: Solid optical medium layer
60, 110: Wavefront control element
64, 114: Blue phase liquid crystal
67, 117: Alignment film
71 to 75, 91 to 95: Segment electrode
81, 101: One-piece electrode
82 to 84, 102 to 104: Power-supply electrode
70: Driving means for liquid crystal lens (a case of segment type electrode pattern)
80: Driving means for liquid crystal lens (a case of power-supply type electrode pattern)
90: Driving means for aberration correction element (a case of segment type electrode pattern)
100: Driving means for aberration correction element (a case of power-supply type electrode pattern)
200: Liquid crystal element (optical modulation element)
210: Light source
201: Blue phase liquid crystal
202, 203: Electrode
204, 205: Glass substrate
206: Seal
207: Heating transparent plate
208: AC power supply
220: Screen
500, 510: Coated substrate
520: Substrate with medium layer

BEST MODE FOR CARRYING OUT THE INVENTION

From now, embodiments of the present invention will be described with reference to drawings.

FIRST EXAMPLE

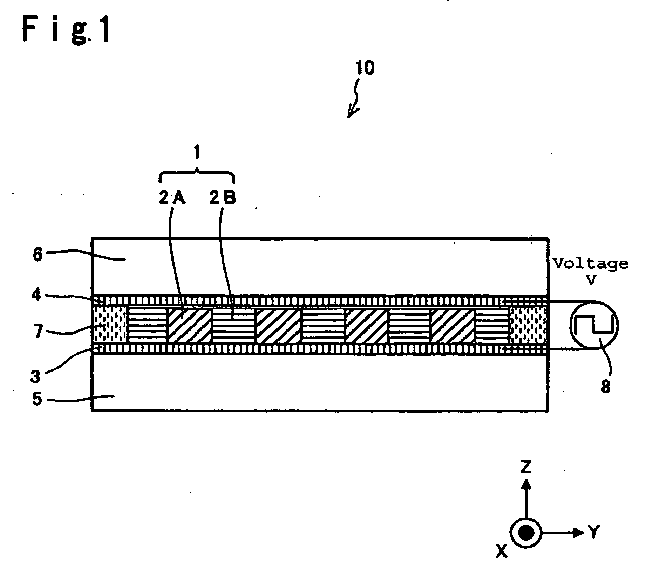

In the first example, a diffraction element and an optical attenuator are described as optical elements. Fig. 1 is a view schematically showing a cross-sectional structure of a diffraction element according to the first example. In Fig. 1, a diffraction element 10 has a construction comprising transparent substrates 5 and 6, transparent electrodes 3 and 4 formed on one surface of the transparent substrate 5 and one surface of the transparent substrate 6 respectively, a grating 2A present between the transparent electrodes 3 and 4 and constituted by isotropic-refractive-index solid material members of substantially rectangular solid shape arranged periodically in parallel with each other, a diffraction grating 1 constituted by an isotropic-refractive-index liquid crystal 2B filling regions between the isotropic-refractive-index solid material members constituting the grating 2A, and a seal 7 sealing the isotropic-refractive-index liquid crystal in conjunction with the transparent substrates 5 and 6.

Here, an isotropic-refractive-index solid material means a transparent substance having a constant refractive index $n_s$ regardless of polarization direction of incident light and having no birefringency, the isotropic-refractive-index solid material may be an inorganic material such as $SiO_2$ or SiN, or an organic material such as a polyimide or a UV-curable resin. Further, a periodical arrangement pattern of the grating 2A and the isotropic-refractive-index liquid crystal 2B constituting the diffraction grating 1 (hereinafter referred to as the diffraction grating pattern) is obtained by processing an isotropic-refractive-index solid material formed to have a desired film thickness D of about 1 $\mu$m to 100 $\mu$m, by a micro-fabrication technique such as photolithography or dry etching. If a photo-sensitive material such as a photo-sensitive polyimide, is employed for the grating 2A (isotropic-refractive-index solid material), it can be patterned into a grating shape only by conducting an exposure and development using a mask corresponding to the diffraction grating pattern, whereby the production process of the diffraction grating pattern can be simplified, such being preferred.

Then, with respect to sealing of the isotropic-refractive-index liquid crystal 2B, in the same manner as conventional liquid crystal elements, a seal 7 is applied by printing on the transparent substrate 6 on which the transparent electrode 4 is formed, and the sealing member is pressed and adhered to the transparent substrate 5 and solidified to form a cell. Then, through an injection port provided on a portion of the seal (not shown), an isotropic-refractive-index liquid crystal 2B whose refractive index n(V) isotropically changes depending on the magnitude of applied voltage V, is injected so that the isotropic-refractive-index liquid crystal 2B fills the region between isotropic-refractive-index solid material members of the grating 2A, and the injection port is sealed to complete the diffraction element 10. Here, since the thickness D of the isotropic-refractive-index solid material of the grating 2A in the direction perpendicular to the transparent substrate 5, defines the layer thickness of the transparent-refractive-index liquid crystal 2B, a gap control agent employed for conventional liquid crystal elements do not have to be employed.

The liquid crystal employed as the isotropic-refractive-index liquid crystal 2B, may be any material so long as its refractive index for incident light changes isotropically according to the magnitude of applied voltage V. When a blue phase liquid crystal is employed as the isotropic-refractive-index liquid crystal 2B, a high-speed response of at most 1 msec is realized, such being preferred. Further, when a polymer stabilized blue phase liquid crystal is employed as the isotropic-refractive-index liquid crystal 2B, since the temperature range for expressing blue phase becomes wider, temperature control for maintaining the isotropic-refractive-index liquid crystal 2B to be a blue phase becomes easy, such being more preferred. Material and production process to be used for such polymer stabilized blue phase liquid crystal, are disclosed in Nature Materials, Vol. 1, 2002, September, P. 64 etc. and its description will be omitted in this document. In the following, concave portions of the grating 2A having a periodical concave-convex shape, are filled with a blue phase liquid crystal containing a polymer stabilized cholesteric blue phase liquid crystal exhibiting a cholesteric blue phase, unless otherwise specified.

The voltage output from voltage control means 8 is applied to the isotropic-refractive-index liquid crystal 2B via the transparent electrodes 3 and 4, to control the alignment of the isotropic-refractive-index liquid crystal 2B to control the refractive index.

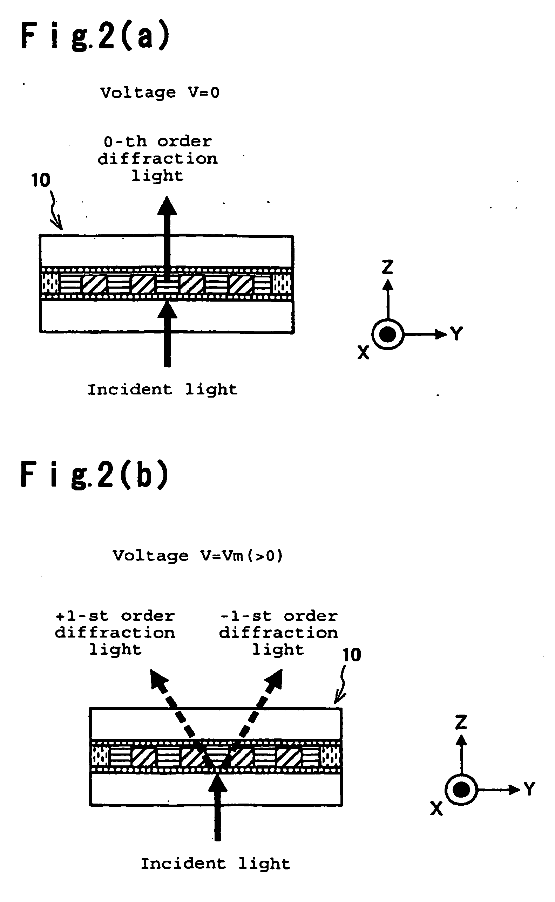

From now, an example of voltage response of the diffraction element 10 according to the first example will be described. Figs. 2(a) and 2(b) are explanation views explaining examples of voltage response of the diffraction element 10 according to the first example. Fig. 2(a) is an explanation view explaining an example of voltage response in a case where the applied voltage V=0, Fig. 2(b) is that in a case where a voltage Vm providing the maximum $\pm$1-st order diffraction light (i.e. the minimum 0-th order diffraction light (transmission light)) is applied. Hereinafter, diffraction light other than 0-th order diffraction light is also referred to as high-order diffraction light.

In a diffraction grating 1 having a structure in which a grating 2A having a substantially rectangular solid shape and an isotropic-refractive-index liquid crystal 2B are alternately and periodically arranged as shown in Fig. 1, when the ratio between the width of the grating 2A and the width of the isotropic-refractive-index liquid crystal 2B is 1:1, the 0-th order diffraction efficiency $n_0$ showing the proportion of incident light of wavelength $\lambda$ which is straightly transmitted through the diffraction element 10, is approximated by a formula $\eta_0 = \cos^2(n \times \Delta n \times d/\lambda)$. Here, $\Delta n$ indicates the difference between the refractive index n(V) of the isotropic-refractive-index liquid crystal 2B and the refractive index $n_s$ of the grating 2A constituting the diffraction grating 1, namely, $\Delta n = |n(V) - n_s|$.

Accordingly, by selecting the isotropic-refractive-index solid material of the grating 2A and the isotropic-refractive-index liquid crystal 2B so as to satisfy $n(0V) = n_s$ at a time of applying no voltage, the 0-th order diffraction efficiency $n_0$ becomes 100% as shown in Fig. 2(a), incident light is straightly transmitted and loss of light quantity due to generation of high-order diffraction light can be substantially prevented. On the other hand, since the difference ($\Delta n$) between n(V) and $n_s$ is increased by increasing the applied voltage V, 0-th order diffraction efficiency $\eta_0$ decreases, and at an applied voltage Vm providing $\Delta n \times d = \lambda/2$, the 0-th order diffraction efficiency $n_0$ can be made substantially 0 and $\pm$1-st order diffraction light can be maximized as shown in Fig. 2(b).

As separator for isolating 0-th order diffraction light straightly transmitted through the diffraction element from diffraction light (high-order diffraction light) not straightly transmitted, to extract only the straightly transmitted light, for example, a light-converging element such as a lens or a light-converging mirror is mentioned. In an optical system employing a light-converging element such as a lens or a light-converging mirror and converging light emitted from a light source on a light-receiving portion of a photodetector, the diffraction element is disposed in an optical path between the light source and a light converging point by the light-converging element, whereby an optical attenuator is constituted which can control the light quantity converged on the light-converging point depending on the voltage applied between the electrodes of the diffraction element. At the light-converging point, for example, a light-receiving plane of the photodetector is disposed to detect the light quantity of the light signal.

Namely, high-order diffraction light (for example, $\pm$1-st order diffraction light) produced depending on the magnitude of the voltage applied between the electrodes in the diffraction element, is not converged on the photo-receiving plane of the photodetector, but the 0-th order diffraction light not diffracted by the diffraction grating is converged on the photo-receiving plane of the photodetector. As a result, since the quantity of 0-th order diffraction light changes depending on the magnitude of the voltage applied between the electrodes, an optical attenuator capable of changing the signal light quantity at the photodetector, is constituted.

Here, in order to obtain high extinction ratio, it is necessary to isolate straightly transmitted light (0-th order diffraction light) from high-order diffraction light, and such a construction is preferred which employs a light source emitting a light flux having a sharp directivity and a light-converging element converging light straightly transmitted through the diffraction element on a small photo-receiving plane. Here, a light-transmission path such as an optical fiber or a light waveguide may be present between the light source and the diffraction element, or between the photodetector and the diffraction element.

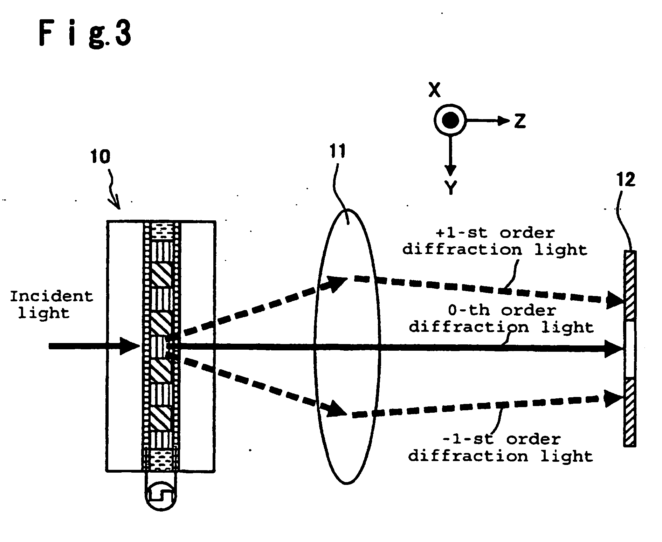

Fig. 3 shows a cross-sectional view of an example of the construction employing as the separator a convex lens 11 for the light-converging element and a limiting aperture 12. The straightly transmitted light (0-th order diffraction light) through the diffraction element 10 is transmitted through the opening portion of the limiting aperture 12 disposed at the position of the converging point of the convex lens while high-order diffraction light cannot be transmitted through the opening portion since it is converged outside of the opening portion of the limiting aperture 12, whereby output light subjected to an intensity modulation can be obtained.

Namely, by switching the applied voltage from 0 to Vm or from Vm to 0, an optical switching of high-speed response with high extinction ratio can be realized. Further, by applying a voltage between 0 to Vm, an optical attenuator whose 0-th order diffraction efficiency no changes from 100% to 0%, can be realized.

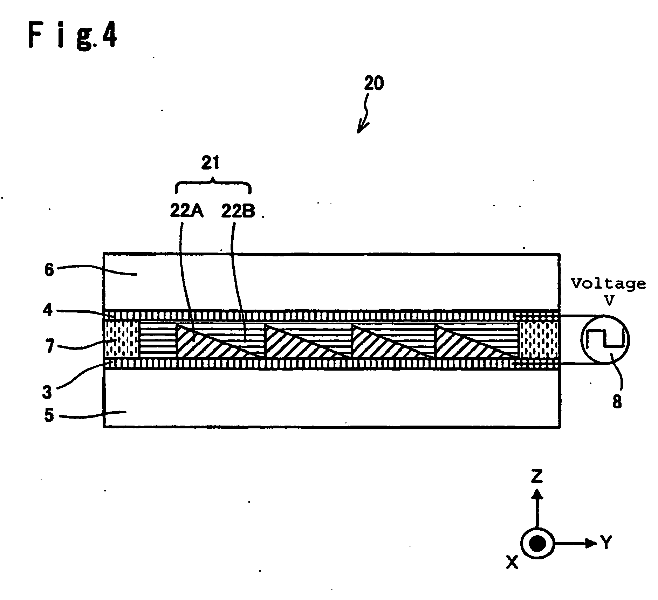

Then, Fig. 4 shows a cross-sectional view of a diffraction element 20 employing a diffraction grating 21 made of an isotropic-refractive-index solid material and having a saw-wave form cross-section. Here, the isotropic-refractive-index solid material constituting the grating 22A of the diffraction grating 21 has film thickness of d as the thickness of the thickest portion of its saw-tooth form, and a grating pitch of P. The diffraction element 20 has the same construction as the diffraction element 10 except that the cross-sectional shape of the diffraction grating is different from that of the diffraction element 10. For this reason, elements in common with those of Fig. 1 have the same reference numerals.

Here, 0-th order diffraction efficiency $\eta_0$ showing the proportion of incident light of wavelength $\lambda$ which is straightly transmitted through the diffraction element 20, is approximated by a formula $\eta_0 = \{\sin(\pi \times \Delta n \times d/\lambda)/(\pi \times \Delta n \times d/\lambda)\}^2$. Further, the diffraction efficiency $\eta_1$ of 1-st order diffraction light having a diffraction angle $\theta$ defined by a formula $\sin\theta = \lambda/P$, is approximated by a formula $\eta_1 = \{\sin(n \times \Delta n \times d/\lambda)/(n-n \times \Delta n \times d/\lambda)\}^2$. Accordingly, when $\Delta n = 0$, $\eta_0 = 100\%$, and when $\Delta n \times d = \lambda$, $\eta_1 = 100\%$. Namely, by switching a voltage V1 providing $n(V1) = n_s$ and a voltage V2 providing $n(V2) = n_s + \lambda/d$ or $n(V2) = n_s - \lambda/d$, the propagation direction of output light from the diffraction element 20 can be switched to a direction inclined by an angle $\theta$ from the direction of incident light.

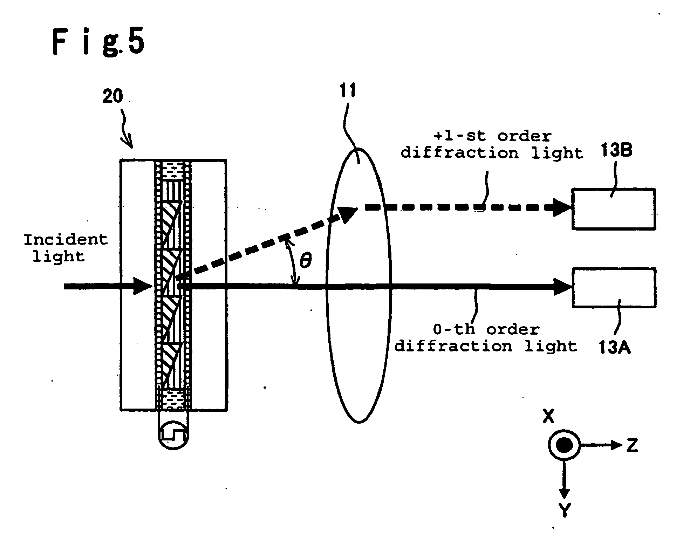

For example, as shown in the cross-sectional view of Fig. 5, the optical transmission path can be switched by providing a convex lens 11 in a light-output side of the diffraction element 20 to converge light transmitted through the diffraction element 20, disposing light-transmission portions 13A and 13B of optical fibers at light-converging positions of 0-th order diffraction light and 1-st order diffraction light respectively, and switching an applied voltage to the transparent electrode 3 and 4 between V1 and V2.

The diffraction element 10 and the diffraction element 20 are each an example of diffraction element transmitting incident light, and by forming a light-reflective film on one side of a transparent substrate constituting the diffraction element, a reflection type diffraction element can be constituted.

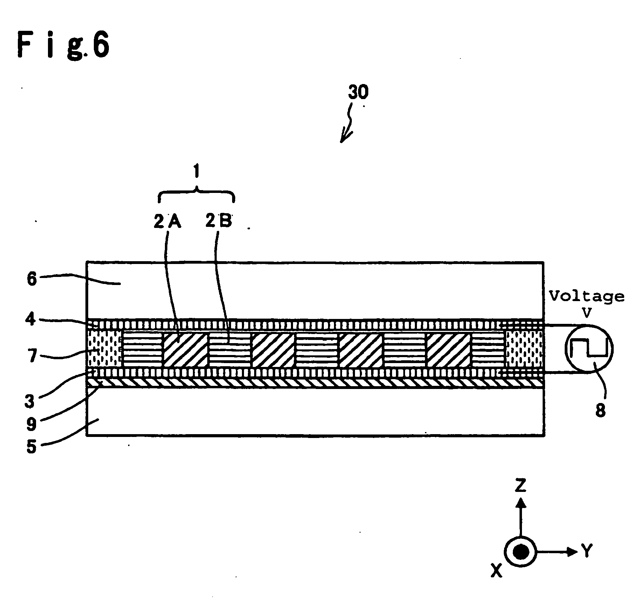

Fig. 6 shows a cross-sectional view of a diffraction element 30 having a construction that a light-reflective film 9 is provided between the transparent substrate 5 and the transparent electrode 3, namely, a construction that a light-reflective film 9 is formed on one side of the transparent substrate 5 and further, a transparent electrode 3 is formed on the light-reflective film 9. The diffraction element 30 has the same construction as that of the diffraction element 10 except that the light-reflective film 9 is formed between the transparent substrate 5 and the transparent electrode 3, and the diffraction element 30 is a reflection type diffraction element reflecting and diffracting incident light. Namely, elements in common with Fig. 1 have the same reference numerals.

The light-reflective film 9 may be a metal film of e.g. aluminum or gold, or a light-reflective film that is an optical multi-layer film formed by laminating a high refractive index dielectric material and a low refractive index dielectric material alternately so that the optical film thickness of each of these films becomes about a quarter wavelengths of incident light. In a case of employing a metal reflective film for the light-reflective film 9, the transparent electrode 3 can be omitted since the metal reflective film functions also as an electrode film for applying a voltage to an isotropic-refractive-index liquid crystal 2B. In a case of employing the optical multi-layer reflective film, the optical multi-layer reflective film may be formed as the optical-reflective film 9 on the transparent electrode 3 formed on the transparent substrate 5.

In the case of such a reflection type diffraction element 30, since the incident light shuttles in the diffraction grating 1, ±1-st order diffraction light is maximized as compared with transmission type diffraction elements shown in Fig. 1 and Fig. 4, necessary refractive index difference $\Delta n$ may be a half since the 0-th order diffraction efficiency $\eta_0$ becomes substantially 0, and accordingly, application voltage Vm can be reduced. Or else, since the voltage dependence of 0-th order diffraction efficiency no becomes equivalent to that of the transmission type diffraction elements even if the film thickness d of the grating 2A of the diffraction grating 1 is reduced to a half, time to produce the diffraction grating can be reduced.

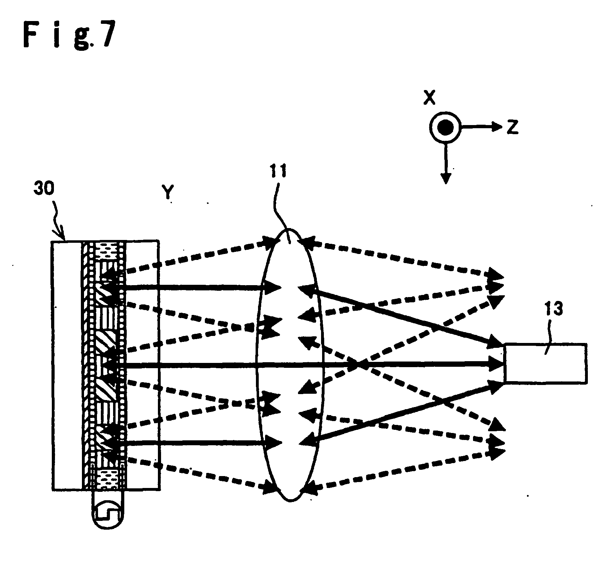

Fig. 7 is a cross-sectional view showing an example of the construction of the optical attenuator employing the diffraction element 30. In Fig. 7, the arrangement is such that light output from the light-transmission portion 13 of an optical fiber is transformed into parallel light by a convex lens 11 and incident perpendicularly into the diffraction element 30. Reflected light output without diffracted by the diffraction element 30, is transmitted again through the convex lens 11 and converged on the light-transmission portion 13 of the optical fiber that the light was output from, and is transmitted through the optical fiber. On the other hand, reflected light output after diffracted by the diffraction element 30, is again transmitted through the convex lens 11 and is not converged on the light transmission portion 13 of the optical fiber that the light was output from, and thus, the light is not transmitted through the optical fiber. Accordingly, it is possible to realize an optical attenuator capable of controlling the quantity of light to return to the optical fiber depending on the magnitude of the applied voltage.

Here, in the above diffraction grating, it is preferred to employ liquid crystal molecules having a positive dielectric anisotropy as a blue phase liquid crystal in order to efficiently reduce polarization dependence at a time of applying voltage.

As described above, in the optical element according to the first example, the refractive index of a liquid crystal having an optical isotropy changes depending on voltage applied via transparent electrodes, and thus, it is possible to realize an optical element such as a diffraction element or an optical attenuator for controlling the light quantity of 0-th order diffraction light depending on applied voltage without depending on incident polarization.

Further, in the diffraction element according to the first example, since the cholesteric blue phase liquid crystal fills concave portions of the grating and the diffraction element is configured to control the refractive index of the cholesteric blue phase liquid crystal by the magnitude of the applied voltage, it is possible to stably obtain high-speed light switching and extinction ratio without depending on incident polarization.

Further, since a polymer stabilized cholesteric blue phase liquid crystal is employed as the cholesteric blue phase liquid crystal, a stable and high extinction ratio can be obtained in a wide temperature range without depending on incident polarization, and a high speed light switching can be obtained.

Further, since a transparent electrode is provided between the diffraction grating and each transparent substrate, patterning of the transparent electrode to accommodate with the grating shape or alignment of the pattern is not necessary.

EMBODIMENT

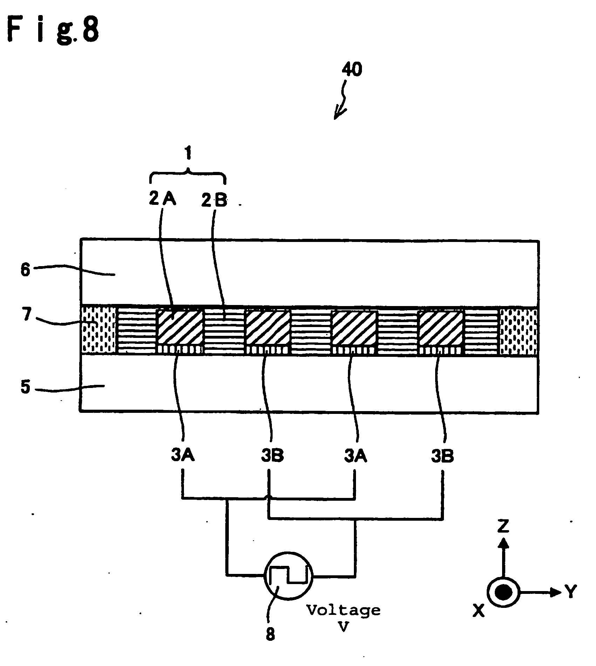

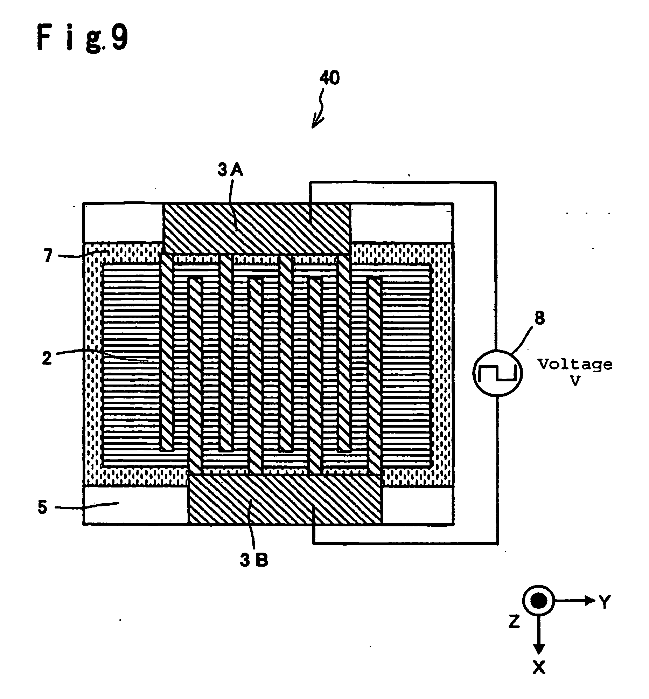

In the embodiment of the present invention, an element having a construction different from that of the diffraction element and the optical attenuator according to the first example in terms of an optical element, is described. Fig. 8 is a cross-sectional view of a diffraction element according to the embodiment of the present invention, and Fig. 9 is a plan view of the diffraction element. A diffraction element 40 according to the embodiment of the present invention has a construction that the transparent electrode 4 is removed from the diffraction element 10 according to the first embodiment of the present invention and patterned transparent electrodes 3A and 3B are provided instead of the transparent electrode 3.

Here, the transparent electrodes 3A and 3B are formed so as to be sandwiched between the transparent substrate 5 and the grating 2A. Other portions in the construction are the same as that of the diffraction element 10 of the first embodiment of the present invention, and thus, their explanation is omitted. Accordingly, elements in common with those of Fig. 1 have the same reference numerals.

The transparent electrodes 3A and 3B each having a linear shape formed in the diffraction grating 1, are, as shown in Fig. 8, alternately connected and thus grouped into two groups of electrodes. Specifically, for example, they are grouped into a group constituted by transparent electrodes 3A alternately formed, and a group constituted by transparent electrode 3B alternately formed, and a voltage is applied between these groups of electrodes so that a voltage is applied between neighboring electrodes. Thus when a voltage is applied between neighboring electrodes, an electric field is formed in the direction of Y axis in the isotropic-refractive-index liquid crystal 2B of the diffraction grating 1, and thus, the refractive index of the liquid crystal 2 is isotropically changed depending on the magnitude of the voltage V. As a result, it is possible to obtain a response equivalent to the voltage response described in the diffraction element according to the first example. Here, in the diffraction grating, it is preferred to employ liquid crystal molecules having a negative dielectric anisotropy as the blue phase liquid crystal in order to efficiently reduce polarization dependence at a time of applying voltage.

The diffraction element 40 shown in Fig. 8 is an example in which transparent electrodes 3A and 3B are formed only a portion (hereinafter referred to as bottom of grating 2A) where the grating 2A contacts with the transparent substrate 5. However, the diffraction element 40 may have such a construction that the transparent electrode film is formed also on the side surface of the grating 2A where grating 2A contacts with the isotropic-refractive-index liquid crystal 2B, so that the transparent electrode film conducts to the transparent electrode film formed on the bottom of the grating 2A. By such a electrode structure, even in a case where the film thickness d of the grating 2A is thick, an electric field can be formed in Y direction, which is uniform in the direction of the thickness of the isotropic-refractive-index liquid crystal 2B, and the intensity of the electric field thus formed can be increased by reducing the grating pitch P, and accordingly, a large optical path difference $\Delta n \times d$ (the difference between the optical path of the grating 2A and the optical path of the isotropic-refractive-index liquid crystal 2B) at a relatively low voltage, whereby it is possible to obtain a large change of straightly transmitted 0-th order diffraction light.

Further, by forming transparent electrodes 3A and 3B on a transparent substrate 5 on which the optical multi-layer film is formed as a light-reflective film, a voltage response of a reflection type diffraction element can be obtained in the same manner as the diffraction element 30 shown in Fig. 6.

By the construction of the diffraction element according to the embodiment of the present invention, since fabrication and forming of the electrodes and the diffraction grating are required only on the transparent substrate 5, the number of components can be reduced and production process can be simplified. Further, in the diffraction element according to the embodiment of the present invention, a diffraction grating pattern may be spatially divided or the diffraction grating pattern may be made to be a so-called hologram grating pattern which has a spatially curved shape other than a linear shape, or in which the grating pitch is distributed, whereby a plurality of diffraction light can be generated or a wavefront of the diffraction light can be transformed, and thus, such a construction is effective in a case of using diffraction light to e.g. detect signal light.

As described above, in the diffraction element according to the embodiment of the present invention, since an electrode pattern is formed only on the surface of the substrate on which a grating made of an isotropic-refractive-index solid material is formed, and since no electrode is required in the opposing substrate surface and thus no alignment is necessary, the process for producing the element can be simplified as compared with conventional elements.

Further, in the optical attenuator according to the embodiment of the present invention, a diffraction element having electrodes patterned only on the substrate surface side, and a separator is provided, whereby high-speed light switching and an extinction ratio that are equivalent or more than those of the conventional elements can be stably obtained without depending on the incident polarization state, and the process for producing the element can be simplified as compared with conventional elements.

Second example

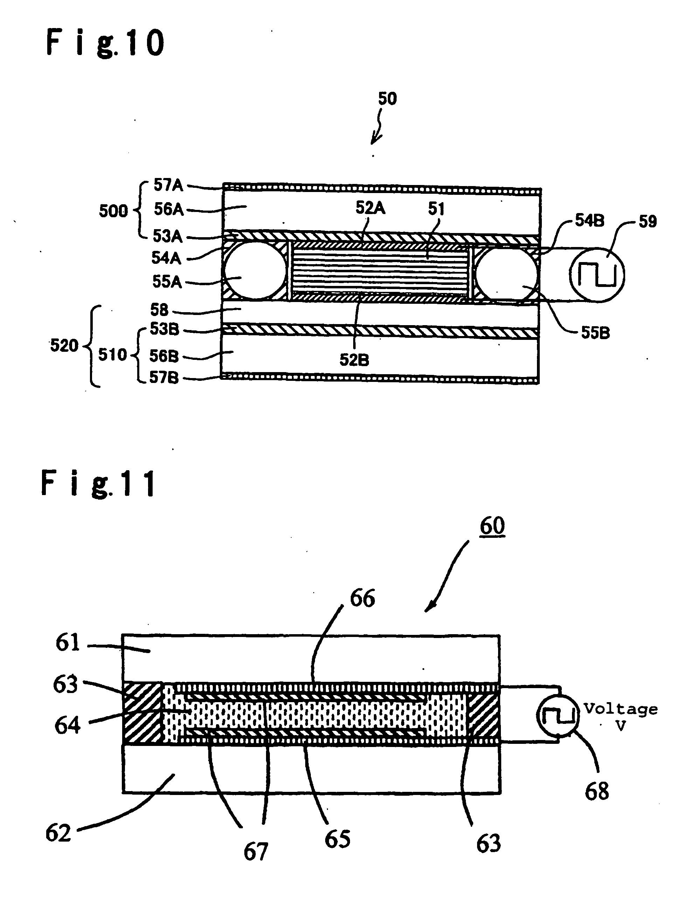

In the second example, a wavelength-variable filter is described as an optical element. Fig. 10 is a view showing a schematic side-cross-sectional structure of a wavelength-variable filter. In Fig. 10, a wavelength-variable filter 50 is a so-called liquid crystal etalon type wavelength-variable filter, which comprises a pair of transparent substrates 56A and 56B opposing to each other, a pair of reflective mirrors 53A and 53B disposed on the transparent substrates 56A and 56B so as to be substantially in parallel with each other and constituting an optical resonator, an isotropic-refractive-index liquid crystal 51 having a refractive index isotropically changing, and transparent electrodes 52A and 52B, and which has a construction that an isotropic-refractive-index liquid crystal 51 and a layer 58 (hereinafter referred to as solid optical medium layer) of transparent and solid, are sandwiched in the optical resonator between the pair of reflective mirrors 53A and 53B.

The reflective mirrors 53A and 53B are provided respectively on surfaces opposed to each other of the pair of substrates 56A and 56B respectively that are opposed to each other, the transparent electrode 52A is provided between the isotropic-refractive-index liquid crystal 51 and the reflective mirror 53A, a transparent electrode 52B is provided between the isotropic-refractive-index liquid crystal 51 and the solid optical medium layer 58, and they are configured to sandwich the isotropic-refractive-index liquid crystal 51. Here, the pair of transparent electrodes 52A and 52B is provided to apply a voltage to the isotropic-refractive-index liquid crystal 51. By such a construction, a liquid crystal etalon type wavelength-variable filter having no polarization dependence, can be realized.

Here, on the surfaces of the substrates 56A and 56B on the other side from the surfaces on which the reflective mirrors 53A and 53B are provided respectively, antireflective films 57A and 57B may be provided respectively to reduce reflections of incident light and transmitted light as the case requires. Further, in order to sandwich a portion constituted by the isotropic-refractive-index liquid crystal 51 and the transparent electrodes 52A and 52B between the reflective mirror 53 and the solid optical medium layer 58, adhesive agents 54A and 54B together with spacers 55A and 55B are sandwiched between the reflective mirror 53A and the solid optical medium layer 58 to thereby hold the portion constituted by the isotropic-refractive-index liquid crystal 51 and the transparent electrodes 52A and 52B.

As the transparent electrodes 52A and 52B, an oxide film such as ITO formed by adding $SnO_2$ to $In_2O_3$, or a metal film of Au or Al can be employed. An ITO film is more preferred since it has a good light transmittance and is excellent in mechanical durability as compared with a metal film.

Further, the reflective mirrors 53A and 53B have, for example, a reflectivity of at least 80% to incident light in a wavelength region of e.g. from 1,470 to 1,630 nm to be used, and have a transmittance of not 0 so that a part of light is transmitted. As the reflective mirrors 53A and 53B, for example, a thin metal film or a dielectric multi-layer film formed by alternately laminating a high-refractive index dielectric film and a low-refractive index dielectric film each having an optical film thickness in the order of wavelength, may be employed. Particularly, the dielectric multi-layer film is preferably employed as the reflective mirrors since its spectral reflectivity can be controlled by the film construction and the film shows little light absorption.

As the high-refractive index dielectric material constituting the dielectric multi-layer film, for example, $Ta_2O_5$, $TiO_2$, $Nb_2O_5$ or Si may be employed. Further, as the low-refractive index dielectric multi-layer film, for example, $SiO_2$, $MgF_2$ or $Al_2O_3$ may be employed. Here, in a case of employing as the reflective mirror a dielectric multi-layer film formed by laminating Si and $SiO_2$ alternately, it is possible to make the film function as a transparent electrode by imparting conductivity to the Si layer by doping an impurity. Further, by employing a thin film of a metal such as Au or Ag, such a film functions also as the reflective mirror even though it shows high light absorption. In this case, transparent electrodes 52A and 52B do not have to be formed.

In the second example, a solid optical medium layer 58 is provided between the reflective mirror 53B and the isotropic-refractive-index liquid crystal 51. However, this is not a requirement and if the solid optical layer 58 is provided, it may be provided in the one or both of the position between the reflective mirror 53B and the isotropic-refractive-index liquid crystal 51 and the position between the reflective mirror 53A and the isotropic-refractive-index liquid crystal 51. If the solid optical medium layer 58 is provided between the reflective mirror 53B and the isotropic-refractive-index liquid crystal 51, the following things become possible. By such a construction, it is possible to narrow the half value width of light transmitted through the wavelength-variable filter, and to control a wavelength interval of peaks of the transmitted light. Here, as the solid optical medium layer 58, for example, a glass substrate, a plastic substrate of e.g. an acryl or a polycarbonate, or an inorganic material substrate made of an inorganic crystals of e.g. Si or $LiNbO_3$,

may be employed. The solid optical medium layer 58 is preferably a glass substrate since it is excellent in durability, more preferably a quartz glass substrate since it has low heat expansion, low light absorption and high transmittance.

Further, the isotropic-refractive-index liquid crystal 51 may be any material so long as it has a refractive index for incident light isotropically changing depending on the magnitude of applied voltage. Further, it is preferred to employ a blue phase liquid crystal since it removes polarization dependence and realizes high-response of at most 1 msec. The exhibiting temperature of the blue phase is preferably such that from the viewpoint of the easiness of controlling temperature to exhibit the blue phase, the blue phase is exhibited in a predetermined temperature range in a temperature range of about 35°C to 65°C. To control the temperature for obtaining a blue phase, for example, a heater for controlling the temperature may be formed with e.g. ITO film in the wavelength-variable filter 50. Further, by employing a polymer stabilized blue phase liquid crystal, the exhibiting temperature range of blue phase is expanded and the temperature control to keep the isotropic-refractive-index liquid crystal 51 to be a blue phase, becomes unnecessary, such being more preferred. Description of the material and the process to produce the polymer stabilized blue phase liquid crystal, is omitted since examples of these items are described in Photonic Technology Letters, Vol. 3, No. 12, P. 1091 (1991).

To the surfaces of the substrates 500 and 520 sandwiching the isotropic-refractive-index liquid crystal 51, a horizontal alignment film or a vertical alignment film may be applied as films to align liquid crystal molecules. However, such alignment films are not required. No alignment film is preferably used to reduce process steps and increase production efficiency from the viewpoint of the process for producing.

As described above, since the refractive index of the liquid crystal having optical isotropy changes depending on the voltage applied via transparent electrodes, it is possible to realize an optical element achieving high-speed response equivalent or more than that of conventional element without depending on incident polarization.

As described above, in the wavelength-variable filter, since the isotropic-refractive-index liquid crystal is disposed in the optical resonator and the filter is configured to be capable of changing the refractive index of the liquid crystal by applying a voltage, it is possible to select a desired wavelength without employing an additional optical component other than the filter.

Further, since a cholesteric blue phase liquid crystal is employed as the isotropic-refractive-index liquid crystal, the response speed of the wavelength-variable filter can be improved as compared with a wavelength variable filter employing conventional nematic liquid crystal.

Further, a polymer stabilized cholesteric blue phase liquid crystal is employed as the cholesteric blue phase liquid crystal, it is possible to realize stable operation in a wide temperature range without depending on incident polarization.

Third example

In the third example, as optical elements, a wavefront control element, a liquid crystal lens and an aberration correction element are described. Fig. 11 is a view schematically showing the cross-sectional structure of the wavefront control element. In Fig. 11, a wavefront control element 60 comprises a pair of transparent substrates 61 and 62, a seal 63 sandwiched and adhered between the transparent substrate 61 and 62, a blue phase liquid crystal 64 filling a space between the transparent substrates 61 and 62, transparent electrodes 65 and 66 provided respectively on one side of the transparent substrate 61 and one side of the transparent substrate 62 facing to the blue phase liquid crystal 64, an alignment film 67 and a voltage control means 68.

The pair of transparent substrates 61 and 62 is combined with a seal to constitute a cell. Inside of the cell is filled with the blue phase liquid crystal 64. The transparent substrates 61 and 62 may be made of a glass or an organic material so long as they are transparent for light to be transmitted through the wavefront control element 60, but they are preferably made of a glass since it is excellent in heat resistance and durability.

The seal 63 is formed by e.g. screen printing the transparent substrate 61 or 62 with a thermosetting polymer such as an epoxy resin or a UV curable resin mixed with about several percent of a spacer such as glass fiber. Thereafter, the transparent substrates 61 and 62 are overlapped and pressed to be adhered to each other and such a sealing material is consolidated into a seal to form a cell.

The blue phase liquid crystal 64 is basically a material formed by adding e.g. a chiral material as an optically active material to e.g. a nematic liquid crystal material, that exhibits a cholesteric phase at a room temperature. When the cholesteric phase has a spiral cycle of at most several hundreds of nanometer, a phase having a unique three-dimensional cyclic structure of blue phase, is formed at a temperature in the vicinity of the phase-transition temperature between cholesteric phase and isotropic phase.

In this phase, liquid crystal molecules are aligned so as to form a cyclic three-dimensional spiral structure, which may be regarded as an isotropic refractive index material in the order of light wavelength. Accordingly, a normal liquid crystal material has an effective refractive index changing depending on polarization, but since the blue phase liquid crystal has an effective refractive index not changing depending on polarization, the blue phase liquid crystal is particularly suitable material for a polarization optical system employing e.g. a laser diode. Further, the blue phase liquid crystal has a voltage response of at most 1 msec that is faster than a normal nematic liquid crystal, and accordingly, it is a preferred material for an application in which wavefront is desired to be changed at high speed.

On the other hand, the temperature range of a typical blue phase is 1°C or narrower, and thus, a highly precise temperature control device has been required to apply the blue phase to e.g. various types of optical systems. However, as described in the section of Prior Art of this document, in recent years, a technique has been developed, according to which a blue phase is thermally stabilized in a temperature range of 60°C or wider by mixing from several percent to several tens of percent of photo-polymerable polymer into a liquid crystal and photo-polymerize them in a blue phase temperature range. Refer to Nature Materials, Vol. 1, 2002, September, P. 64. Accordingly, in the present invention, the polymer stabilized blue phase liquid crystal is employed in the wavefront control element 60, whereby a highly precise temperature control device becomes unnecessary and the blue phase can be maintained at a wide temperature range, such being very preferred.

The transparent electrodes 65 and 66 are for applying a voltage to the blue phase liquid crystal 64, and firmly provided on the surfaces of the transparent substrates 61 and 62 respectively via alignment films 67. They are connected with external voltage control means 68 via wires to be applied with a voltage. Further, the transparent electrodes 65 and 66 are shown as a pair of one-piece electrodes not divided in Fig. 11. However, in this embodiment, they are each divided into a plurality of segment electrodes or a power supply electrode is disposed in an electrode to form an electric field distribution, so as to constitute an electrode pattern providing a phase distribution corresponding to a desired wavefront control.

The alignment film 67 is to obtain an alignment of the blue phase liquid crystal 64, and is firmly provided on a surface of the transparent substrates 61 and 62 facing to a blue phase liquid crystal 64. The alignment film 67 is to control the alignment of the blue phase liquid crystal 64, and the alignment film 67 may be treated to have a vertical alignment or a horizontal alignment by rubbing the polyimide film and forming a silicon oxide film by vapor deposition. To obtain a uniform blue phase in an effective light-flux area, it is preferred to employ a horizontal alignment film.

From now, as applications of the wavefront control element 60 according to the third example, with respect to the construction having a lens function (liquid crystal lens) and a construction having a wavefront aberration modulation function (aberration modulation element), the relation between the electrode pattern and the phase distribution of transmitted light will be described.

(I) Liquid crystal lens:

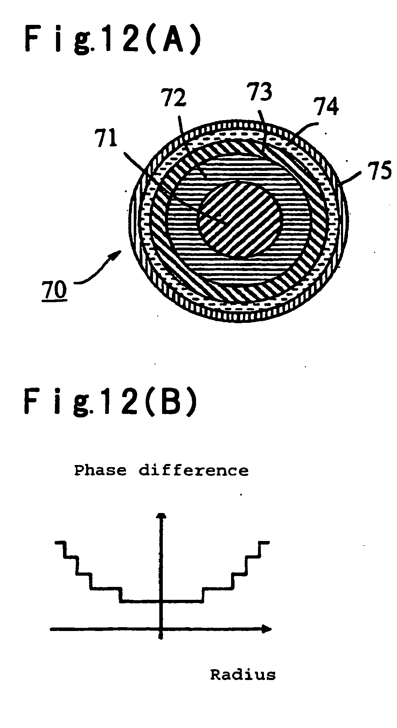

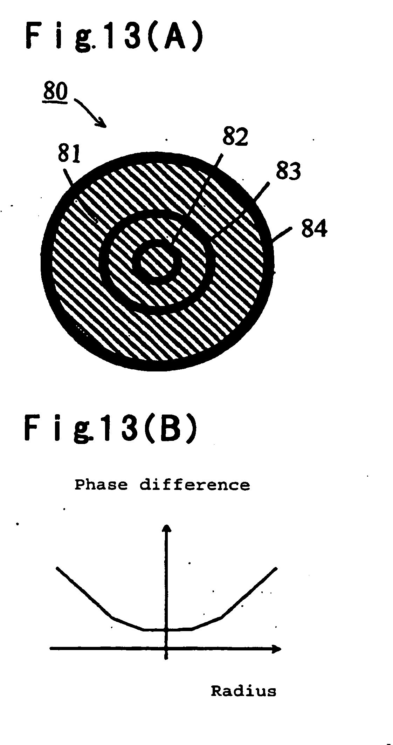

Fig. 12(A) is a schematic view of means (hereinafter referred to as "liquid crystal lens driving means 70") for effecting a lens function as a liquid crystal lens, which particularly shows an example of segment type electrode pattern, and Fig. 12(B) shows a phase difference distribution obtained by the segment electrode pattern Fig. 12(A). Meanwhile, Fig. 13(A) is also a schematic view of driving means 80 for effecting a lens function as a liquid crystal lens, which particularly shows an example of power supply type electrode pattern, and Fig. 13(B) shows a phase difference distribution obtained by the power supply type electrode pattern Fig. 13(A).

The segment type electrode pattern of the liquid crystal lens driving means 70 shown in Fig. 12(A), is formed by dividing a one-piece electrode into segment electrodes 71 to 75 by e.g. etching, and these segment electrodes are connected to an external voltage control means, not shown, so as to be applied with respective voltages. Meanwhile, the power supply electrode pattern of the liquid crystal lens driving means 80 shown in Fig. 13(A), is formed by forming power supply electrodes 82 to 84 made of a material having a low electric resistance, on a one-piece electrode 81. The power supply electrodes 82 to 84 are connected with an external voltage control means, not shown, so as to be applied with respective voltages. By this construction, since a voltage drop corresponding to the voltage difference between the power supply electrodes 82 and 84 is formed in the one-piece electrode 81 (entire area of hatched portion), the electric field distribution continuously changes in the electrode plane.

Here, the voltage characteristics of the effective refractive index of the blue phase liquid crystal 64, depends on the dielectric anisotropy of the liquid crystal material. Namely, if the dielectric anisotropy is positive, liquid crystal molecules are horizontally aligned when no voltage is applied, and the effective refractive index decreases as the applied voltage increases. On the other hand, if the dielectric anisotropy is negative, liquid crystal molecules are vertically aligned when no voltage is applied, and the effective refractive index increases as the applied voltage increases. In a case of nematic liquid crystal, the voltage dependence of effective refractive index strongly depends on an initial alignment and polarization of light source. This is because birefringency of liquid crystal molecules functions as anisotropy corresponding to the initial alignment, for the wavelength of light. However, in a case of blue phase liquid crystal, since the birefringency of the liquid crystal changes in the order of wavelength of light without depending on the initial alignment, the liquid crystal can be regarded as an isotropic medium not depending on incident polarization, and thus, its effective refractive index can be controlled isotropically depending on applied voltage.

Accordingly, by making the shapes of the segment electrodes 71 to 75 or the power supply electrodes 82 to 84 and an applied voltage appropriately, it is possible to obtain a phase distribution in a shape of quadratic curve shown in Fig. 12(B) or Fig. 13(B). As a result, a wavefront of transmitted light is modulated to have a predetermined phase distribution by a wavefront control element 60 (namely, liquid crystal lens driving means 70 or 80), and the light can be converged or diverged considering that the light beam propagates in the direction perpendicular to the wavefront.

Namely, by obtaining the liquid crystal lens driving means 70 or 80 having the above construction, it is possible to make the wavefront control means function as a high-speed-focal-point-variable-lens not depending on incident polarization.

(II) Aberration correction element:

Then, as another application of the wavefront control element 60 according to the third example, an example of a construction of the wavefront control element having a wavefront aberration modulation function (aberration correction element), is shown. Since the aberration correction element can modulate an incident wavefront to have a predetermined wavefront aberration, the element can be applied for the purpose of e.g. compensating a wavefront aberration of an optical system.

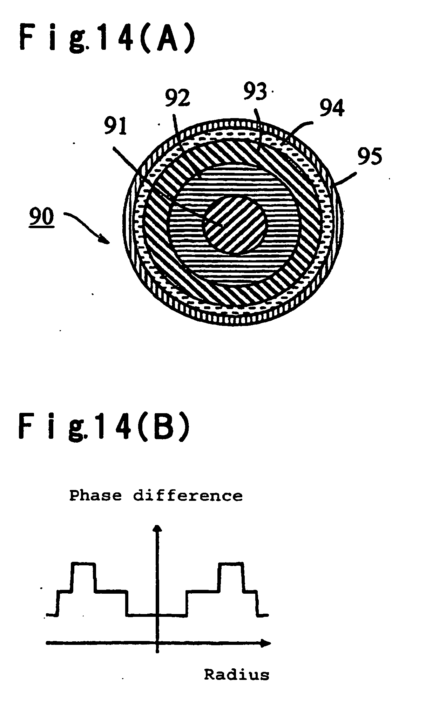

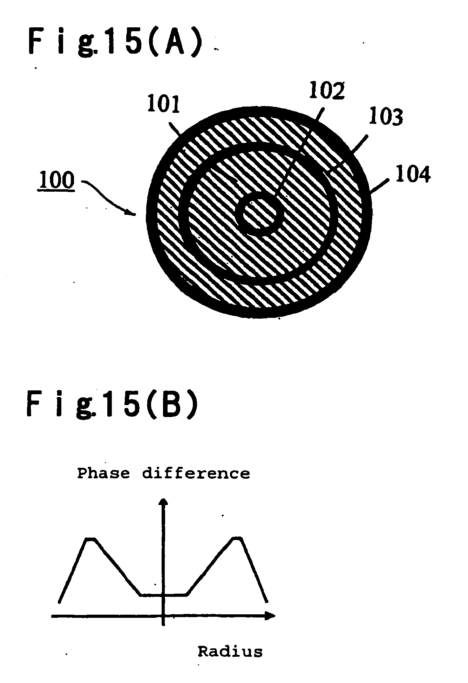

Fig. 14(A) is a schematic view of an aberration correction element driving means 90 for generating a spherical aberration as an aberration correction element, which particularly shows an example of segment type electrode pattern, and Fig. 14(B) shows a phase difference distribution obtained by the segment type electrode pattern of Fig. 14(A). Meanwhile, Fig. 15(A) is also a schematic view of an aberration correction element driving means 100 for generating a spherical aberration as an aberration correction element, which particularly shows an example of power supply type electrode pattern, and Fig. 15(B) shows a phase difference distribution obtained by the power supply type electrode pattern of Fig. 15(A).

The producing process and the function of the segment electrodes 91 to 95 of the aberration correction element driving means 90 shown in Fig. 14(A), the producing process and the function of the one-piece electrode 101 (entire hatching portion) and power supply electrodes 102 to 104 of the aberration correction element driving means 100 shown in Fig. 15(A), are the same as those of the above-mentioned liquid crystal lens driving means 70 and 80, and thus their detailed descriptions are omitted. Also in here, by appropriately setting the shape and the applied voltage to the segment electrodes 91 to 95 of the aberration correction element driving means 90 or power supply electrodes 102 to 104 of the aberration correction driving means 100, it is possible to obtain a phase distribution shown in Fig. 14 (B) or Fig. 15 (B).

In the above example, since the shape and the applied voltage to the segment electrodes 91 to 95 or the power supply electrodes 102 to 104, are set depending on a spherical aberration to be compensated, a wavefront transmitted through the aberration correction element driving means 90 or 100, is modulated into a wavefront containing a spherical aberration depending on the phase distribution of Fig. 14(B) or Fig. 15(B). Then, if a spherical aberration contained in an optical system can be cancelled by thus modulated spherical aberration, the aberration of the optical system can be compensated. By setting the electrode shape and the applied voltage by an equivalent method, other aberrations such as coma aberrations or astigmatisms can also be compensated.

The difference between a phase difference distribution produced by the wavefront control element and a target phase distribution, can be reduced by increasing the number of segment electrodes or the power supply electrodes of the driving means. However, if the number of these electrodes becomes too many, the structure and the control becomes too complicated, such being not preferred. Accordingly, as compared with a construction employing segment electrodes exemplified in Fig. 12(A) or Fig. 14(A), a construction employing power supply electrodes exemplified in Fig. 13(A) or Fig. 15(A) can form a continuous voltage distribution and a shape close to the target phase distribution can be obtained with small number of electrodes and thus is preferred.

As described above, the refractive index of a liquid crystal having an optical isotropy changes depending on voltage applied via transparent electrodes, and thus it is possible to realize an optical element of high-speed response not depending on incident polarization.

Further, in the wavefront-control element, the refractive index of a liquid crystal having an optical isotropy changes depending on voltage applied via transparent electrodes, and thus it is possible to realize a high-speed response not depending on incident polarization.

Further, since a transparent electrode to apply voltage to a cholesteric blue phase liquid crystal, is provided with a plurality of power supply electrodes for generating an electric field distribution in the electrode plane, it is possible to obtain a phase distribution depending on the electric field difference between the power supply electrodes, and thus it is possible to obtain a highly precise wavefront control with simple voltage control means.

Further, the wavefront control element employs a polymer stabilized blue phase liquid crystal, the temperature range of the blue phase is expanded by a polymer network formed in the liquid crystal and thus, it is possible to perform a wavefront control not depending on incident polarization in a wide temperature range.

Further, in the liquid crystal lens, since the refractive index of the liquid crystal having optical isotropy is changed depending on a voltage applied to the liquid crystal via transparent electrodes, high-speed response can be achieved without depending on polarization, and the focal length for transmitted light can be changed depending on the applied voltage.

Further, in the aberration correction element, since the refractive index of a liquid crystal having an optical isotropy changes depending on voltage applied via transparent electrodes, high-speed response can be achieved without depending on incident polarization, and it is possible to modulate an incident wavefront into a wavefront containing a spherical aberration, a coma aberration or an astigmatism, depending on applied voltage, and thus, it is possible to compensate a wavefront aberration of an optical system.

Fourth example

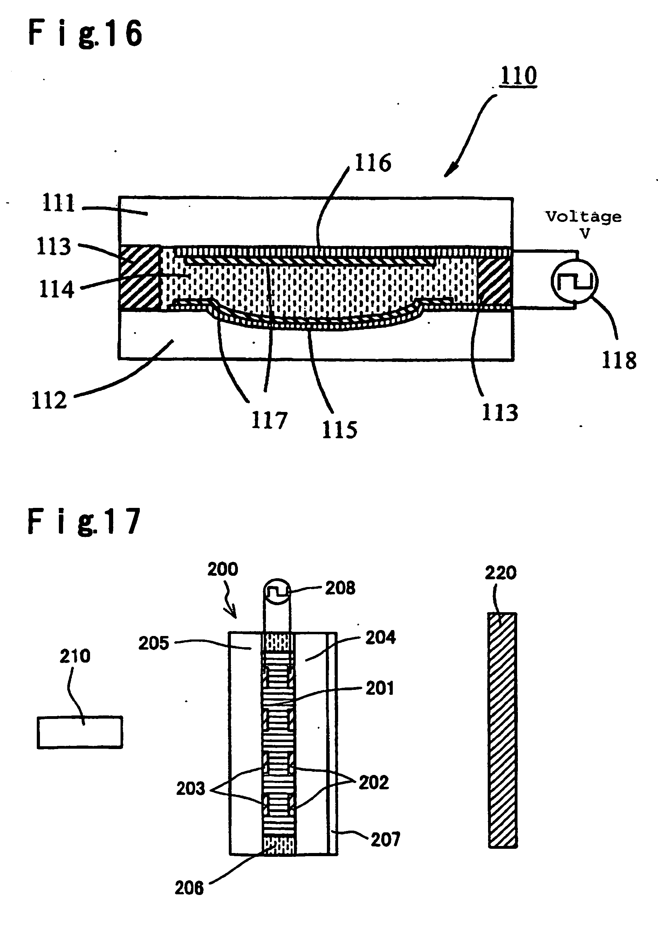

In the fourth example, a wavefront control element is described as an optical element. Fig. 16 is a view showing a schematic cross-sectional shape of a wavefront control element. In Fig. 16, a wavefront control element 110 constitutes a liquid crystal lens for obtaining a lens function.

The wavefront control element 110 comprises transparent substrates 111 and 112, a seal 113 sandwiched between the transparent substrates 111 and 112, a blue phase liquid crystal 114 filling a space between the transparent substrates 111 and 112, transparent electrodes 115 and 116 provided on one surface of the transparent substrate 111 facing to the blue phase liquid crystal 114 and one surface of the transparent substrate 112 facing to the blue phase liquid crystal 114 respectively, and alignment films 117 also provided on these surfaces, and the wavefront control element 110 is configured so that voltage applied to the blue phase liquid crystal 114 is controlled by voltage control means 118.

On one surface of the transparent substrate 112, a concave or a convex equal to a desired phase distribution shape is formed. Such a concave or convex can be formed on the transparent substrate 112 by using an etching method, a press method or an injection molding method. After forming the concave or the convex on the transparent substrate 112, a transparent electrode 115 and an alignment film 117 are formed. Here, for the transparent substrate 111, a flat plate having a substantially rectangular cross-sectional shape is employed.

While segment electrodes or power supply electrodes are provided for the transparent electrodes 65 and 66, one-piece electrodes can be employed for the transparent electrode 115 and 116. By such a construction, there is a merit that the electrode construction and the voltage control can be simplified.

When a uniform voltage is applied to a blue phase liquid crystal 114 by voltage control means 118, the effective refractive index of the blue phase liquid crystal 114 is changed depending on the voltage, and thus a wavefront is modulated into the concave or the convex shape formed on the transparent substrate 112. In this embodiment, as shown in Fig. 16, it is possible to converge or diverge transmitted light if the concave or the convex shape is a quadratic curved surface symmetric with respect to the optical axis.

Accordingly, by the wavefront control element 110 having the above construction, it is possible to realize a high-speed focal point variable lens without depending on incident polarization.

In an equivalent construction, by making the convex or the concave shape formed on the transparent substrate a target wavefront shape, it is possible to modulate a wavefront into an optional shape. For example, it is possible to add a function of compensating a wavefront aberration by forming a concave or a convex shape corresponding to a wavefront aberration function to be compensated on a transparent substrate (for example, a transparent substrate 112 in this embodiment shown in Fig. 16).

By such a construction, since it is possible to modulate a wavefront into a shape equal to the concave or the convex on the transparent substrate, the error of wavefront can be minimized by optimizing the concave or the convex shape, such being preferred. A phase distribution generated is linear to the difference between the refractive index ($n_S$) of the transparent substrate 112 and the effective refractive index ($n_L$) of the blue phase liquid crystal 114. In Fig. 16, if $n_S > n_L$ is satisfied, a concave lens function is exhibited and if $n_S < n_L$ is satisfied, a convex lens function is exhibited. Further, if $n_S = n_L$ is satisfied, the phase distribution becomes uniform and lens function is not exhibited.

As described above, since the refractive index of a liquid crystal having an optical isotropy changes depending on voltage applied via the transparent electrodes, it is possible to realize an optical element capable of achieving high-speed response without depending on incident polarization.

Further, in the wavefront control element, since the refractive index of a liquid crystal having optical isotropy changes depending on voltage applied via transparent electrodes, it is possible to realize high-speed response not depending on incident polarization.

EXAMPLES

EXAMPLE 1

As Example 1, a diffraction element 10 having the cross-sectional structure shown in Fig. 1, is described. Fig. 1 is a view schematically showing a cross-sectional shape of the diffraction element 10 according to the first example. Transparent electrodes 3 and 4 made of ITO were formed on one surface of the transparent substrates 5 and 6 made of glass respectively. Further, a surface of a transparent substrate (glass) 5 on which a transparent electrode film (ITO) 3 is formed, is coated with polyimide by spin coating. Then the polyimide after the spin coating is baked to be consolidated to form an isotropic refractive index layer having a refractive index $n_s$ of 1.54 at a wavelength 633 nm and having a film thickness d of 7 μm. The polyimide film formed as the isotropic refractive index layer, is patterned by photolithography and dry etching to form a grating 2A. The grating 2A is formed in such a shape that an isotropic-refractive-index solid material of substantially rectangular solid shape are arranged in parallel in a periodical concave-convex shape, the grating 2A has a thickness of 7 μm in

the direction perpendicular to the transparent substrate (glass) 5 (Z direction shown in Fig. 1), the ratio between the width of the isotropic-refractive-index solid material and the width of the isotropic-refractive-index liquid crystal 2B becomes 1:1 in the direction in which the period of the arrangement of substantially rectangular solid shapes become the shortest (Y direction shown in Fig. 1), and the grating pitch P as the period of the arrangement of the substantially rectangular solid shapes becomes 20 μm.

Then, using a sealing material, a seal 7 is applied by printing to a surface of the transparent substrate (glass) 6 on which a transparent electrode film (ITO) 4 is formed, and they are pressed against the transparent substrate (glass) 5 to bond to each other to form a cell. After a seal 7 is formed by forming the cell, a liquid crystal obtained by mixing a chiral material, a liquid crystal monomer, a polymerization initiator and a nematic liquid crystal having a positive dielectric anisotropy, is injected through an injection port (not shown) provided at a part of the seal 7, into concave portions of the grating 2A having periodicity, to form an isotropic-refractive-index liquid crystal 2B.

In the same manner as the material and the production process described in Nature Materials, Vol. 1, 2002, September, P. 64, in a state that the temperature is adjusted so that the phase of the liquid crystal becomes a blue phase, the cell in which the liquid crystal injected is irradiated with ultraviolet rays to polymerize the monomer to form a polymer stabilized blue phase liquid crystal which exhibits a blue phase in a temperature range of from room temperature to 50°C, to form an isotropic-refractive-index liquid crystal 2B. Further, the injection port provided in a part of the seal 7 is sealed with an adhesive agent to form a diffraction element 10.

The performance of a test element having a polymer stabilized blue phase liquid crystal formed in a cell having a distance between transparent electrodes of 10 μm was measured and as a result, the refractive index n(V) of the polymer stabilized blue phase liquid crystal changed from n(0 V)=1.54 to n(150 V)=1.49 as the increase of applied voltage having a rectangular waveshape of 1 kHz, and thus, the refractive index changed by about 0.05 and the response speed of the test element was about 1 msec. In general, since the refractive index of liquid crystal changes depending on the magnitude of electric field applied, as distance between electrodes is narrower, the same refractive index change can be obtained at lower voltage. Further, the response speed changes substantially in proportion to square of the distance between electrodes, and the speed increases as the distance between electrodes is narrower.

Namely, since the distance between the electrodes constituting the diffraction element 10 according to Example 1, is the thickness of the isotropic-refractive-index solid material (equal to the thickness of the isotropic-refractive-index liquid crystal 2B) d(=7 μm) constituting the grating 2A, the applied voltage required to achieve the refractive index of the test element becomes about 7/10 of that of the above-mentioned test element, and accordingly, response speed increases as the distance between electrodes become narrower, and becomes at most 1 msec.

The difference $\Delta n$ between the refractive index $n(V)$ of the isotropic-refractive-index liquid crystal 2B filling convex portions of the grating 2A and the refractive index $n_s$ of the grating 2A, becomes $\Delta n=0$ when no voltage is applied since $n(0\ V)=n_s$, but the difference becomes $\Delta n=0.05$ when 105 V is applied, and thus an optical path difference $\Delta n \times d=0.35\ \mu m$ is generated between the optical path of the grating 2A and the optical path of the isotropic-refractive-index liquid crystal 2B. As a result, when laser light having a wavelength of $\lambda=633$ nm is incident into the diffraction element 10, when V=0, only 0-th order diffraction light straightly transmitted can be obtained as shown in Fig. 2(a), and as the voltage V increases, high-order diffraction light are generated and the straightly transmitted light is decreased. Finally, at Vm (at most 100 V) at which $\Delta n \times d$ becomes $\lambda/2$, the straightly transmitted light becomes substantially 0 as shown in Fig. 2(b).

Accordingly, as shown in Fig. 3, by disposing an opening portion 12 of a limiting aperture at a position of converging point of a convex lens 11 and thereby shutting off high-order diffraction light other than straightly transmitted 0-th order diffraction light, it is possible to obtain output light whose intensity is modulated depending on applied voltage. Since both of the grating 2A and the isotropic-refractive-index liquid crystal 2B have isotropic refractive indexes not depending on incident polarization, it is possible to obtain a diffraction element showing a voltage response not depending on incident polarization, and since polarization direction of output light is not changed, it is possible to realize a diffraction element suitable for a wide range of application.

EXAMPLE 2

As Example 2 of the present invention, a diffraction element having a cross-sectional construction shown in Fig. 8 is described. Fig. 8 is a view schematically showing the cross-sectional structure of the diffraction element 40 according to the present invention. In the diffraction element 40 shown in Fig. 8, on patterned transparent electrode 3A and 3B, 16 layers of alternately laminated $SiO_2$ film (as a low refractive index dielectric material) and $Ta_2O_5$ film (as a high refractive index dielectric material) are formed so that each film has an optical film thickness (refractive index $\times$ film thickness) of $\lambda/4$ at a wavelength of $\lambda=633$ nm, to form a light-reflective film (hereinafter referred to as dielectric multi-layer reflective film), not shown, to form a reflection type diffraction element. Since incident light shuttles the layer in which the grating 2A and the isotropic-refractive-index liquid crystal 2B are formed, the film thickness d of the grating 2A is made 3.5 $\mu m$ that is a half of that shown in Example 1 of the present invention. Further, in order to apply effectively high electric field to the isotropic-refractive-index liquid crystal 2B by low voltage, fabrication is made so that the grating pitch P becomes 10 $\mu m$ and the distance between the neighboring transparent electrodes 3A and 3B becomes 5 $\mu m$. Further, as the isotropic-refractive-index liquid crystal 2B, a nematic liquid crystal having negative dielectric anisotropy mixed with a chiral material, a monomer and a polymerization initiator, is employed. The construction of the portion other than the above-described portion is substantially the same as the corresponding portion of the diffraction element of the present invention and the diffraction element 10 described in Example 1.

In the diffraction element according to the present invention thus formed, the distance d between the electrodes is 5 $\mu m$ corresponding to that of the test element described in Example 1, and thus, the applied voltage can be reduced to approximately a half, and the response speed becomes at most 1 msec.

Specifically, while no voltage is applied, $n(0\ V)=n_s$ and thus the refractive index difference becomes $\Delta n=0$, but when 75 V is applied, the refractive index difference becomes $\Delta n=0.05$ which causes to generate an optical path difference of $2 \times \Delta n \times d=0.35\ \mu m$ since the element is a reflection type. As a result, when laser light of wavelength $\lambda=633$ nm is incident into the diffraction element, at V=0, only 0-th order diffraction light (hereinafter referred to as normally reflected light, and this reflection is referred to as normal reflection) reflected according to normal principle of reflection at the dielectric multi-layer reflective film, but as the voltage V increases, high-order diffraction light is generated and the normal reflection light is reduced. Finally, at Vm (about 75 V) at which $\Delta n \times d$ becomes $\lambda/4$, the normal reflection light becomes substantially 0.

Accordingly, in the construction shown in Fig. 7, by employing the diffraction element according to the present invention instead of the reflection type diffraction element 30 and by disposing light-output-input end of an optical fiber 13 at a focal point of a convex lens 11, and further by transmitting through the optical fiber 13 only 0-th order diffraction light normally reflected by the diffraction element according to the present invention, reflected light whose intensity is modulated according to applied voltage is returned to the optical fiber 13 and is transmitted back through the optical fiber 13.

EXAMPLE 2

As Example 2, a wavelength-variable filter 50 having a cross-sectional construction shown in Fig. 10 is described. Fig. 10 is a view schematically showing the cross-sectional structure of the wavelength-variable filter 50 according to Example 2.

Antireflective films 57A and 57B are previously formed on backsides of the substrates (quartz glass) 56A and 56B respectively, and on the substrates, dielectric multi-layer films having a reflectivity of 95% and a transmittance of about 5% for light having a wavelength from 1,500 nm to 1,600 nm are formed as reflective mirrors 53A and 53B, to produce coated substrates 500 and 510. Then, as a solid optical medium layer 58, a quartz glass of 40 $\mu$m thick is adhered to the reflective mirror 53B surface of the coated substrate 510 using an adhesive agent (not shown) having approximately the same refractive index as the quartz glass, to form a medium-layer-attached substrate 520.

Then, on the reflective mirror 53A surface of the coated substrate 500 and the solid optical medium layer 58 surface of the medium-layer-attached substrate 520, transparent electrodes 52A and 52B of ITO film of 7 nm thick are formed respectively. Then, on the solid optical medium layer 58 of the medium-layer-attached substrate 520, spacers 55A and 55B of 10 $\mu$m in diameter for liquid crystal displays, wrapped with adhesive agent 54A and 54B, are applied as a sealing material to form a sealing pattern layer, and the medium-layer-attached substrate is laminated, via the sealing pattern layer, with the coated substrate 500 provided with the transparent electrode 52A of ITO film.

Then, the spacing between the transparent electrode 52A and the transparent electrode 52B that are ITO films, is filled with a mixture of a chiral material, a monomer, a polymerization initiator and a nematic liquid crystal. In the same manner as the material and the process disclosed in Photonic Technology Letters, Vol. 3, No. 12, P. 1091 (1991), in a state that the temperature is controlled so that the liquid crystal exhibits a blue phase, the cell in which the liquid crystal is injected, is irradiated with ultraviolet rays to polymerize the monomer to form an isotropic-refractive-index liquid crystal 51 of a polymer stabilized blue phase liquid crystal which exhibits a blue phase in a temperature range of from a room temperature to about 50°C.

Using a test element obtained by removing reflective mirrors 53A and 53B from a liquid crystal etalon type wavelength-variable filter 50, in which a cell having a distance between transparent electrodes of 10 $\mu$m is filled with a polymer stabilized blue phase liquid crystal, a measurement was carried out, and as a result, by applying an applied voltage V of rectangular wave of 1 kHz, the refractive index n(V) of the polymer stabilized blue phase liquid crystal is changed from n(0 V)=1.54 to n(150 V)=1.49, namely, isotropically changed by about 0.05 and the change of the response speed of the refractive index was at most 1 msec.

Accordingly, the wavelength-variable filter 50 of liquid crystal type according to Example 2, is a wavelength-variable filter capable of changing the interval of neighboring transmission peak wavelengths by about 16 nm, and changing the transmission peak wavelength by at most about 10 nm according to the application of rectangular wave voltage by voltage control means 59, and which shows no polarization dependence and shows a response speed of at most 1 msec.

EXAMPLE 3

As Example 3, a wavefront control element 60 provided with liquid crystal driving means 70 is described. Fig. 11 is a view schematically showing the cross-sectional structure of the wavefront control element 60 according to Example 3, and Fig. 12(A) is a view schematically showing an electrode pattern of the liquid crystal driving means 70 according to Example 3. At first, a process for producing the wavefront control element 60 provided with the liquid crystal lens driving means 70, is described with reference to Fig. 11 and Fig. 12.

(1) At first, transparent electrodes 65 and 66 are formed on one surface of the transparent substrates 61 and one surface of the transparent substrate 62 respectively. Example 3 employs a glass for the transparent substrates 61 and 62.

(2) Then, the transparent electrodes 65 and 66 are formed by spattering ITO on one surface of each of the transparent substrates 61 and 62, and the transparent electrode 65 on the transparent substrate 62 is divided into segment electrodes 71 to 75 of Fig. 12(A) by means of photolithography technique and etching method.

(3) The segment electrodes 71 to 75 are connected with an external voltage control means 58 so as to be applied with respective voltages.

(4) Then, on the surfaces on which the transparent electrodes 65 and 66 are formed respectively, polyimide is applied by spin coating, baked to be consolidated and subjected to a rubbing method to exhibit alignment force for liquid crystal, to form alignment films 67.

(5) Then, a thermosetting type adhesive agent mixed with 5% of glass fiber spacers each having a diameter of 10 $\mu$m, is applied by printing on the surface of the transparent substrate 61 on which the transparent electrode 66 is formed, and the transparent substrate 62 is overlapped, pressed and consolidated to form a cell.

(6) Thereafter, from an injection port (not shown) provided at a part of the seal 63, a blue phase liquid crystal 64 prepared by mixing a chiral material, a monomer and a polymerization initiator into a nematic liquid crystal, is injected so as to fill the cell.

As the blue phase liquid crystal 64, a polymer stabilized blue phase liquid crystal having a blue-phase-exhibiting temperature range of from a room temperature to 50°C, is employed, which is prepared by using the same material and the process disclosed in Nature Materials, Vol. 1, 2002, September, P. 64 cited in the above "Prior Art", that in a state that the temperature is controlled so that the liquid crystal cell exhibits blue phase, a cell in which the liquid crystal is injected is irradiated with ultraviolet rays to polymerize the monomer.

(7) Finally, the injection port is sealed with an adhesive agent to form a wavefront control element 60 provided with liquid crystal lens driving means 70.

The thickness of the liquid crystal layer of the wavefront control element 60 according to Example 3, is 10 $\mu$m. The refractive index of the blue phase liquid crystal 64 changes depending on an applied voltage. The voltage dependence n(Vrms) of refractive index of the blue phase liquid crystal 64 is such that, when a rectangular alternate voltage of 1 kHz is applied, n(0 Vrms) =1.54 and n(150 Vrms)=1.49 and thus the refractive index changes by about 0.05 by the voltage application of 150 Vrms. Further, since the voltage dependence of refractive index does not depend on incident polarization, the change of the refractive index is isotropic. Further, response speed is at most about 1 msec.

Then, the function of the wavefront control element 60 according to Example 3 provided with the liquid crystal lens driving means 70, is described. Collimated laser light of wavelength 633 nm is incident into the wavelength control element 60 provided with the liquid crystal lens driving means 70, and voltages of from 0 Vrms to 150 Vrms are applied to the electrodes 71 to 75, the transmitted wavefront shows a distribution shown in Fig. 12 (B) and the element functions as a convex lens having a focal length of about 500 mm. Further, by changing applied voltage to the transparent electrodes 65 and 66, the focal point can be moved in the direction of optical axis.

Thus, by the wavefront control element 60 according to Example 3 provided with the liquid crystal lens driving means 70, a focal length variable lens can be produced, which can be controlled at high speed without depending on the state of incident polarization.

EXAMPLE 4

As Example 4, a wavefront control element 60 provided with a liquid crystal lens driving means 100, is described. Fig. 11 is a view schematically showing the cross-sectional structure of the wavefront control element 60 according to Example 4, and Fig. 15(A) is a view schematically showing an electrode pattern of the liquid crystal lens driving means 100 according to Example 4. At first, a process for producing the wavefront control element 60 according to Example 5 provided with the liquid crystal lens driving means 100, is described with reference to Fig. 11 and Fig. 15.

(1) At first, transparent electrodes 65 and 66 are formed on one surface of a transparent substrate 61 and one surface of a transparent substrate 62 respectively. The transparent electrodes 65 and 66 are formed by spattering ITO on one surface of the transparent substrate 61 and one surface of the transparent substrate 62 respectively.

(2) Further, the transparent electrode 65 on the transparent substrate 62 is patterned by photolithography technique and etching method to form a one-piece electrode 101 of Fig. 15(A).

(3) Then, a chrome film is further formed by spattering, and patterned again by photolithography technique and etching method to form power supply electrodes 102 to 104 as shown in Fig. 15(A). The power supply electrodes 102 to 104 are connected to external voltage control means 68 so as to be applied with respective voltages.

(4) Then, surfaces of the transparent substrates on which transparent electrodes 65 and 66 and the one-piece electrode 101 are respectively formed, are coated with polyimide and the polyimide is baked to be consolidated and subjected to a rubbing method to exhibit alignment force for liquid crystal, to form alignment films 67.

(5) Then, a thermosetting type adhesive agent mixed 5% of glass fiber spacers each having a diameter of 10 pm, is applied by printing on the surface of the transparent substrate 61 on which the transparent electrode 66 is formed, and the transparent substrate 62 is overlapped, pressed and consolidated to form a cell. From an injection port (not shown) provided in one part of a seal 63, a blue phase liquid crystal 64 prepared by mixing a chiral material, a monomer and a polymerization initiator into a nematic liquid crystal, is injected so as to fill in the cell.

As the blue phase liquid crystal 64, a polymer stabilized blue phase liquid crystal having a blue-phase-exhibiting temperature range of from a room temperature to 50°C, is employed, which is prepared by using the same material and the process disclosed in Nature Materials, Vol. 1, 2002, September, P. 64 cited in the above "Prior Art", that in a state that the temperature is controlled so that the liquid crystal cell exhibits blue phase, a cell in which the liquid crystal is injected is irradiated with ultraviolet rays to polymerize the monomer.

(6) Finally, by sealing the injection port with an adhesive agent, a wavefront control element 60 provided with a liquid crystal lens driving means 100, is formed.

The thickness of the liquid crystal layer of the wavefront control element 60 according to Example 4, is 10 $\mu$m in the same manner as Example 3. The voltage dependence of refractive index n(Vrms) of the blue phase liquid crystal 64 is such that when a rectangular alternate current of 1 kHz is applied, n(0 Vrms)=1.54 and n(150 Vrms)=1.49 and thus, the refractive index is changed by about 0.05 by an applied voltage of 150 Vrms. Further, since the voltage dependence of refractive index does not depend on the state of incident polarization, the change of refractive index is isotropic. Further, response speed is at most about 1 msec.

Then, the function of the wavefront control element 60 according to Example 4 provided with the liquid crystal lens driving means 100, is described. Collimated laser light of wavelength ($\lambda$) 633 nm is incident into the wavefront control element 60 provided with the liquid crystal lens driving means 100, and from 0 Vrms to 150 Vrms of voltages are applied to the power supply electrodes 102 to 104, and as a result, a transmitted wavefront becomes a shape approximately the same as one shown in Fig. 15(B) and a three-dimensional spherical aberration W(r) represented by a formula:

$$W(r) = 6r^4 - 6r^2 + 1$$

wherein r indicates a distance from optical axis, is generated.

Here, by changing a voltage applied to the power supply electrodes 102 to 104, it is possible to generate a spherical aberration within a continuous range of from -0.2 Arms to 0.2 $\lambda$rms. Accordingly, the wavefront control element 60 according to Example 4 provided with the liquid crystal lens driving means 100, can compensate a spherical aberration contained in an optical system at high speed without depending on incident polarization.

INDUSTRIAL APPLICABILITY

The optical element according to the present invention employing a liquid crystal having an optical isotropy, can be applied to optical elements such as diffraction elements, optical attenuators, wavelength-variable filters, wavefront control elements, liquid crystal lenses and aberration compensation elements, in which an effect of realizing high speed response equivalent or more than that of conventional elements without depending on incident polarization, is useful.

Claims

1. An optical element comprising:

a pair of transparent substrates (5, 6) disposed so as to be opposed to each other;
a grating (2A, 22A) formed on a first (5) of the pair of transparent substrates and made of a solid material having an isotropic refractive index;
an isotropic refractive index liquid crystal (2B, 22B) disposed between the pair of transparent substrates; and
transparent electrodes (3, 3A, 3B, 4) formed on at least one of the transparent substrates, for applying a voltage to the liquid crystal;
wherein the refractive index of the isotropic refractive index liquid crystal (2B, 22B) changes depending on the voltage applied via the electrodes (3, 3A, 3B, 4);
the liquid crystal is a polymer stabilized cholesteric blue phase liquid crystal, which has an exhibiting temperature range of cholesteric blue phase expanded by containing a polymer material, the transparent electrodes (3A, 3B) are disposed between the first transparent substrate (5) and the grating (2A), and,
the transparent electrodes (3A, 3B) are constituted by linear-shaped transparent electrodes each disposed along the grating (2A), the linear-shaped transparent electrodes are alternately connected to form two groups thereof, and the voltage is applicable between neighboring pains of the linear-shaped transparent electrodes of different groups.

2. An optical attenuator comprising:

the optical element (10, 20, 30, 40) as defined in Claim 1, and
a separator for separating a high order diffraction light of incident light generated by application of voltage via the transparent electrodes of the diffraction element, from a 0-th order diffraction light of the incident light to extract the 0-th order diffraction light straightly transmitted through the diffraction element, and
wherein the light quantity of 0-th order diffraction light is controlled depending on voltage applied via the electrodes.

Patentansprüche

1. Optisches Element, umfassend:

ein Paar transparenter Substrate (5, 6), die so angeordnet sind, einander gegenüber zu liegen;
ein auf einem ersten (5) des Paars transparenter Substrate gebildetes und aus einem festen Material mit einem isotropischen Brechungsindex hergestelltes Gitter (2A, 22A);
einen Flüssigkristall mit isotropischem Brechungsindex (2B, 22B), angeordnet zwischen dem Paar transparenter Substrate; und
auf mindestens einem der transparenten Substrate gebildete transparente Elektroden (3, 3A, 3B, 4), um eine Spannung an dem Flüssigkristall anzulegen;

wobei der Brechungsindex des Flüssigkristalls mit isotropischem Brechungsindex (2B, 22B) sich abhängig von der über die Elektroden (3, 3A, 3B, 4) angelegten Spannung ändert,
der Flüssigkristall ein polymerstabilisierter, cholesterischer Blauphase-Flüssigkristall ist, der einen Temperaturbereich aufweist, der cholesterische Blauphase aufweist, welcher durch das Enthalten eines polymeren Materials erweitert ist,
die transparenten Elektroden (3A, 3B) zwischen dem ersten transparenten Substrat (5) und dem Gitter (2A) angeordnet sind, und
die transparenten Elektroden (3A, 3B) durch geradlinig geformte transparente Elektroden gebildet sind, die jeweils entlang des Gitters (2A) angeordnet sind, wobei die geradlinig geformten transparenten Elektroden abwechselnd verbunden sind, um zwei Gruppen davon zu bilden, und die Spannung zwischen benachbarten Paaren der geradlinig geformten transparenten Elektroden verschiedener Gruppen anlegbar ist.

2. Optischer Dämpfer, umfassend:

das in Anspruch 1 definierte optische Element (10, 20, 30, 40), und
einen Separator zum Separieren von Brechungslicht höherer Ordnung von einfallendem Licht, erzeugt durch die Anlegung von Spannung über die transparenten Elektroden des Brechungselements, von einem Brechungslicht nullter Ordnung des einfallenden Lichts, um das Brechungslicht nullter Ordnung, das geradewegs durch das Brechungselement durchgelassen wird, zu extrahieren, und

wobei die Lichtmenge des Brechungslichts nullter Ordnung abhängig von über die Elektroden angelegter Spannung kontrolliert wird.

**Revendications**

1. Elément optique comprenant :

une paire de substrats transparents (5, 6) disposés de manière à être opposés l'un à l'autre ;
une grille (2A, 22A) formée d'un premier (5) de la paire de substrats transparents et réalisée en un matériau solide présentant un indice de réfraction isotrope ;
des cristaux liquides à indice de réfraction isotrope (2B, 22B) disposés entre la paire de substrats transparents ; et
des électrodes transparentes (3, 3A, 3B, 4) formées sur au moins l'un des substrats transparents, afin d'appliquer une tension sur les cristaux liquides ;
dans lequel l'indice de réfraction des cristaux liquides à indice de réfraction isotrope (2B, 22B) varie en fonction de la tension appliquée par l'intermédiaire des électrodes (3, 3A, 3B, 4) ;
les cristaux liquides sont des cristaux liquides à phase cholestérique bleue stabilisés par polymère, qui présentent une plage de température d'exhibition de la phase cholestérique bleue étendue par le fait qu'ils contiennent un matériau polymère,

les électrodes transparentes (3A, 3B) sont disposées entre le premier substrat transparent (5) et la grille (2A), et
les électrodes transparentes (3A, 3B) sont constituées par les électrodes transparentes de forme linéaire disposées chacune le long de la grille (2A), les électrodes transparentes de forme linéaire sont reliées de manière alternée afin de former deux groupes de celles-ci, et la tension peut être appliquée entre des broches voisines des électrodes transparentes de forme linéaire de différents groupes.

2. Atténuateur optique comprenant :

l'élément optique (10, 20, 30, 40) selon la revendication 1, et
un élément de séparation destiné à séparer une lumière de diffraction d'ordre élevé d'une lumière incidente produite par application d'une tension par l'intermédiaire des électrodes transparentes de l'élément de diffraction, d'une lumière de diffraction d'ordre 0 de la lumière incidente afin d'extraire la lumière de diffraction d'ordre 0 transmise directement à travers l'élément de diffraction, et

dans lequel la quantité de lumière de la lumière de diffraction d'ordre 0 est commandée en fonction de la tension appliquée par l'intermédiaire des électrodes.

# Fig.1

10

1

2A  2B

6

Voltage
V

4

7

3

5

8

Z

Y

X

# Fig.2(a)

Voltage V=0

0-th order
diffraction
light

10

Incident light

Z
X Y

# Fig.2(b)

Voltage V=Vm(>0)

+1-st order
diffraction
light

-1-st order
diffraction
light

10

Incident light

Z
X Y

# Fig.3

X

Z

Y

10

11

12

Incident
light

+1-st order
diffraction light

0-th order
diffraction light

-1-st order
diffraction light

# Fig.4

**20**

**21**

**22A** **22B**

**6**

**4**

**7**

**3**

**5**

Voltage
V

**8**

Z

Y

X

# Fig.5

Incident light

θ

+1-st order diffraction light  **13B**

0-th order diffraction light  **13A**

20

11

X

Z

Y

# Fig.6

# F i g.7

# Fig.8

# Fig.9

40

3A

7

2

5

3B

8

Voltage
V

Z Y

X

# Fig.10

# Fig.11

EP 1 688 783 B1

# F i g.12(A)

# F i g.12(B)

Phase difference

Radius

# Fig.13(A)

# Fig.13(B)

**Phase difference**

**Radius**

F i g.14(A)

F i g.14(B)

Phase difference

Radius

## F i g.15(A)

## F i g.15(B)

Phase difference

Radius

# Fig.16

**110**

111

116

**Voltage V**

113

114

112

117    115

113

118

# Fig.17

**200**

**210**

208

205    204

201

203    202

206

207

**220**

**EP 1 688 783 B1**

## REFERENCES CITED IN THE DESCRIPTION

**Patent documents cited in the description**

- US 4767194 A
- JP 5045618 A
- JP 6148692 A
- DE 3425584

**Non-patent literature cited in the description**

- *Nature Materials,* September 2002, vol. 1, 64
- *Photonic Technology Letters,* 1991, vol. 3 (12), 1091
- **Kikuchi et al.** *Nature materials,* vol. 1, 64